(19) Europäisches Patentamt
European Patent Office
Office européen des brevets

(11) EP 3 837 229 B1

(12) **FASCICULE DE BREVET EUROPEEN**

(45) Date de publication et mention de la délivrance du brevet:
**22.06.2022 Bulletin 2022/25**

(21) Numéro de dépôt: **19790678.7**

(22) Date de dépôt: **19.09.2019**

(51) Classification Internationale des Brevets (IPC):
***C04B 35/10*** (2006.01) ***C04B 35/52*** (2006.01)
***C04B 35/56*** (2006.01) ***C04B 35/565*** (2006.01)
***C04B 35/571*** (2006.01) ***C04B 35/58*** (2006.01)
***C04B 38/00*** (2006.01)

(52) Classification Coopérative des Brevets (CPC):
(C-Sets disponibles)
**C04B 35/52; C04B 35/10; C04B 35/56; C04B 35/5611; C04B 35/5622; C04B 35/571; C04B 35/58; C04B 38/0032;** C04B 2235/48; C04B 2235/483; C04B 2235/6026; C04B 2235/614; C04B 2235/94 (Cont.)

(86) Numéro de dépôt international:
**PCT/FR2019/052205**

(87) Numéro de publication internationale:
**WO 2020/058647 (26.03.2020 Gazette 2020/13)**

(54) **PROCEDE DE FABRICATION D'UNE PIECE DENSIFIEE CONSOLIDEE EN CERAMIQUE OU EN CARBONE**

VERFAHREN ZUR HERSTELLUNG EINES KONSOLIDIERTEN VERDICHTETEN TEILS AUS KERAMIK ODER KOHLENSTOFF

METHOD FOR MANUFACTURING A CONSOLIDATED DENSIFIED PART FROM CERAMIC OR CARBON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2018 FR 1858524**

(43) Date de publication de la demande:
**23.06.2021 Bulletin 2021/25**

(73) Titulaires:
- **Commissariat à l'énergie atomique et aux énergies alternatives 75015 Paris (FR)**
- **Centre National de la Recherche Scientifique 75794 Paris Cedex 16 (FR)**
- **UNIVERSITE DE BORDEAUX 33000 Bordeaux (FR)**

(72) Inventeurs:
- **ALLEMAND, Alexandre 33800 BORDEAUX (FR)**
- **PIQUERO, Thierry 37230 FONDETTES (FR)**
- **BAUX, Anthony 34550 BESSAN (FR)**
- **JACQUES, Sylvain 33400 TALENCE (FR)**
- **CHOLLON, Georges 33400 TALENCE (FR)**

(74) Mandataire: **Brevalex**
**56, Boulevard de l'Embouchure**
**B.P. 27519**
**31075 Toulouse Cedex 2 (FR)**

(56) Documents cités:
**EP-A1- 2 987 779 WO-A1-2015/155445**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **NANGREJO M R ET AL: "PROCESSING OF CERAMIC FOAMS FROM POLYMERIC PRECURSOR-ALUMINA SUSPENSIONS", CELLULAR POLYMERS, RAPRA TECHNOLOGY LTD. SHAWBURY, SHREWSBURY, GB, vol. 20, no. 1, 1 janvier 2001 (2001-01-01), pages 17-35, XP001044134, ISSN: 0262-4893**
- **XU YI ET AL: "Three dimensional printing of carbon/carbon composites by selective laser sintering", CARBON., vol. 96, 1 janvier 2016 (2016-01-01), pages 603-607, XP055529468, GB ISSN: 0008-6223, DOI: 10.1016/j.carbon.2015.09.110**

(52) Classification Coopérative des Brevets (CPC): (Cont.)

C-Sets
**C04B 38/0032, C04B 35/5611, C04B 35/5622, C04B 35/565, C04B 38/0054**

## Description

### DOMAINE TECHNIQUE

L'invention a trait à un procédé de fabrication d'une pièce en céramique ou en carbone.

Plus précisément, l'invention a trait à un procédé de fabrication d'une pièce en une première céramique ou en carbone, consolidée, densifiée, par une deuxième céramique.

La pièce préparée par le procédé selon l'invention possède une géométrie déterminée, de préférence une géométrie complexe.

La pièce préparée par le procédé selon l'invention trouve notamment son application dans les récepteurs solaires pour les centrales thermodynamiques.

Le domaine technique de l'invention peut être défini comme celui de la préparation de pièces en céramique ou en carbone, notamment de pièces en céramique ou en carbone qui possèdent des géométries, formes complexes.

### ÉTAT DE LA TECHNIQUE ANTÉRIEURE

Les pièces en céramique ou en carbone, notamment les pièces en céramique ou en carbone qui possèdent des géométries, formes complexes sont actuellement fabriquées par des procédés longs, complexes et coûteux tels que l'usinage à cru, le frittage, ou le frittage laser, en particulier lorsque l'on souhaite obtenir des pièces denses, pouvant résister à des températures élevées et ayant une bonne tenue mécanique.

De plus, les procédés actuels ne permettent tout simplement pas de fabriquer des pièces en céramique ou en carbone qui possèdent certaines géométries particulièrement complexes. Autrement dit, certaines géométries sont inaccessibles par les procédés de fabrication actuels.

Nangrejo M.R. et al., "Processing of Ceramic Foams from Polymeric Precursor-Alumina Suspensions", Cellular Polymers Vol. 20, No. 1, 2001, divulgue un procédé de fabrication d'une pièce en une première céramique, consolidée par une deuxième céramique, possédant une géométrie déterminée, dans lequel on réalise les étapes successives suivantes : a) on fabrique une préforme en un polyuréthane, la préforme possédant la même géométrie que la pièce à fabriquer ; b) on imprègne la préforme en polyuréthane par une résine polysilane précurseur de SiC (la première céramique) et une poudre d'alumine (la deuxième céramique) ; c) on pyrolyse la résine précurseur de la première céramique ; moyennant quoi, à l'issue de l'étape c), on obtient une pièce en une première céramique possédant la même géométrie que la pièce à fabriquer.

Il existe donc un besoin pour un procédé de fabrication d'un pièce en céramique ou en carbone, en particulier d'une pièce en céramique ou en carbone qui possède une géométrie, forme, complexe, qui soit simple, fiable et d'un coût limité.

Il existe, en outre, un besoin pour un tel procédé qui permette d'obtenir toutes sortes de géométries, et y compris des géométries jusqu'alors impossibles à obtenir par les procédés de fabrication connus.

Il existe encore un besoin pour un tel procédé qui ne présente pas les inconvénients, défauts, limitations et désavantages des procédés de l'art antérieur, et qui apporte une solution aux problèmes des procédés de l'art antérieur.

Ce procédé doit notamment permettre d'obtenir des pièces en céramique ou en carbone denses, pouvant résister à des températures élevées et ayant une bonne tenue mécanique.

Le but de l'invention est de fournir un procédé de fabrication d'une pièce en carbone ou en céramique qui réponde entre autres aux besoins et exigences mentionnés plus haut.

### EXPOSÉ DE L'INVENTION

Ce but, et d'autres encore, sont atteints, conformément à l'invention, par un procédé de fabrication d'une pièce en une première céramique ou en carbone, densifiée, consolidée par une deuxième céramique, possédant une géométrie déterminée, dans lequel on réalise les étapes successives suivantes :

a) on fabrique une préforme en un polymère organique, la préforme possédant la même géométrie que la pièce à fabriquer;

b) on imprègne la préforme en un polymère organique par une résine précurseur de la première céramique (résine précéramique) ou une résine précurseur du carbone;

c) on réticule et/ou on polymérise, puis on pyrolyse la résine précurseur de la première céramique (résine précéramique) ou la résine précurseur du carbone;

d) éventuellement, on répète les étapes b) et c) ;

moyennant quoi, à l'issue de l'étape c) ou de l'étape d), on obtient une pièce en une première céramique ou en carbone possédant la même géométrie que la pièce à fabriquer ;

e) on dépose la deuxième céramique (céramique de consolidation) sur la pièce en une première céramique ou en carbone obtenue à l'issue de l'étape c) ou de l'étape d), par un procédé de dépôt chimique en phase vapeur (« *Chemical Vapour Déposition* » ou « *CVD* » en anglais) ou un procédé d'infiltration chimique en phase vapeur (« *Chemical Vapour Infiltration* » ou « *CVI* » en anglais).

Avantageusement, la géométrie déterminée peut être une géométrie complexe.

Le terme « *géométrie complexe* » est clair pour l'homme du métier dans ce domaine de la technique.

Par géométrie complexe, on entend généralement :

- une géométrie présentant une grande surface spécifique, par exemple supérieure ou égale à 1 $m^2/g$, notamment supérieure ou égale à 2 $m^2/g$, voire supérieure ou égale à 3 $m^2/g$; et/ou
- une géométrie par exemple avec des recoins, et/ou cavités internes, et/ou concavités, et/ou convexités, et/ou orifices, et/ou orifices borgnes, et/ou tortuosités, etc.

Un exemple de géométrie complexe est une structure gyroïde (voir plus bas et Fig. 1).

Avantageusement, la première céramique peut être choisie parmi les céramiques oxydes, les céramiques nitrures, et les céramiques carbures.

Avantageusement, la première céramique peut être choisie parmi le carbure de silicium, le carbure de titane, le carbure de zirconium, le carbure de hafnium, et le carbure de tantale.

Avantageusement, le polymère organique peut être un polymère thermoplastique.

Avantageusement, le polymère thermoplastique peut être choisi parmi les acides polylactiques (PLA), les polycarbonates, les polyamides, les poly(chlorure de vinyle) (PVC), les polymères acrylonitrile-butadiène-styrène (ABS), les polymères élastomères thermoplastiques tels que les polymères élastomères thermoplastiques de polyuréthane, et leurs mélanges.

Avantageusement, la préforme en un polymère organique peut être préparée par un procédé de fabrication additive.

Avantageusement, le procédé de fabrication additive est un procédé d'impression 3D de fil fondu, et le polymère organique est alors un polymère thermoplastique.

Avantageusement, la préforme en un polymère thermoplastique peut présenter une porosité, notamment une microporosité.

Cette porosité ou microporosité peut être obtenue par exemple par dissolution de l'un des polymères de la préforme, ce polymère étant hydrosoluble, dans de l'eau.

Avantageusement, la résine précurseur de la première céramique (résine précéramique) peut être choisie parmi les résines polycarbosilanes, et la résine précurseur du carbone peut être choisie parmi les résines phénoliques, notamment les résines formo-phénoliques.

Avantageusement, la deuxième céramique (céramique de consolidation) peut être choisie parmi les céramiques oxydes, les céramiques nitrures, et les céramiques carbures.

Avantageusement, la deuxième céramique (céramique de consolidation) peut être choisie parmi le carbure de silicium, le carbure de titane, le carbure de zirconium, le carbure de hafnium, et le carbure de tantale.

Avantageusement, la pièce est en une première céramique et la deuxième céramique est identique à la première céramique telle que le SiC. La pièce dense, consolidée alors obtenue peut être qualifiée de monolithe.

Le procédé selon l'invention comprend une suite spécifique d'étapes spécifiques qui n'a jamais été décrite ou suggérée dans l'art antérieur.

Le procédé selon l'invention répond aux besoins et exigences énumérés plus haut et apporte une solution aux problèmes que présentent les procédés de l'art antérieur.

Le procédé selon l'invention permet d'obtenir des pièces avec toutes sortes de géométries, et y compris des géométries jusqu'alors impossibles à obtenir par les procédés de fabrication connus.

Les pièces en céramique ou en carbone obtenues par le procédé selon l'invention sont denses, et elles peuvent généralement résister à des températures élevées, par exemple à des températures supérieures à 1200°C, et ont généralement de bonnes propriétés mécaniques, une bonne tenue mécanique.

Par pièce dense, on entend une pièce dont le taux de porosité est inférieur à 15%. Cette porosité finale dépend de la durée de traitement lors de l'étape finale de CVD.

On peut dire que le procédé selon l'invention comprend, pour simplifier, trois étapes successives, consécutives pour obtenir finalement la pièce souhaitée, à savoir :

- une première étape de fabrication d'une préforme en un polymère organique, notamment en un polymère organique thermoplastique, possédant la même géométrie que la pièce à fabriquer;
- une deuxième étape de transformation de cette préforme en un polymère organique en une pièce en une première

céramique ou en carbone possédant la même géométrie que la pièce à fabriquer. Cette deuxième étape de transformation regroupe les étapes b) et c) d'imprégnation, réticulation et pyrolyse et éventuellement d) du procédé revendiqué. Cette étape peut être qualifiée d'étape de « *PIP* » (« *Polymer Impregnation and Pyrolysis »)*
- une troisième étape de consolidation, densification par un procédé de dépôt chimique en phase vapeur (« *Chemical Vapour Deposition* » ou « *CVD* » en anglais) ou un procédé d'infiltration chimique en phase vapeur (« *Chemical Vapour Infiltration* » ou « *CVI* » en anglais).

Par densification, on entend que la pièce obtenue à l'issue de l'étape de CVD/CVI a une densité, masse volumique supérieure à celle de la pièce avant cette étape, c'est-à-dire la pièce obtenue à l'issue de l'étape de pyrolyse. Par exemple, la densité, masse volumique peut être multipliée par un facteur de 5 à 15, notamment de 6 à 11, en particulier de 7 à 10 lors de cette étape de CVD.

La pièce finale est une pièce dense, c'est-à-dire qu'elle a une porosité microscopique (mesurée par porosité à l'eau ou par pycnomètrie à l'hélium) inférieure à 15% de la densité théorique, qui dépend de la durée du traitement CVD.

La transformation d'une préforme, structure, en un polymère organique, notamment en un polymère organique thermoplastique (matière plastique) ayant notamment une géométrie complexe, en une pièce, structure en céramique ou en carbone de même géométrie, par un procédé de réticulation puis de pyrolyse dit procédé « *PIP »* , puis la consolidation, densification, de cette pièce en céramique ou en carbone par un procédé de « CVD » ou de « CVI » pour obtenir une pièce finale consolidée, densifiée de même géométrie, n'a jamais été décrite ou suggérée dans l'art antérieur. Cette transformation a été réalisée pour la première fois par le procédé selon l'invention.

Si le couplage d'étapes de « *PIP »* et de « *CVD/CVI* » est connu pour préparer des matériaux essentiellement inorganiques tels que des composites à matrice céramique renforcés par des fibres inorganiques. Il n'existe pas de travaux mentionnant la mise en œuvre d'une étape de « *PIP* » pour transformer une préforme initiale en un matériau organique, notamment en un matériau plastique, en une préforme un matériau en céramique ou en carbone de même géométrie. *A fortiori,* le couplage d'une telle étape de transformation par « *PIP »* avec une étape finale de « *CVD/CVI* » n'est ni décrite ni suggérée dans l'art antérieur.

La voie mixte associant « *PIP »* et « *CVD/CVI* » présente l'intérêt d'être plus rapide qu'une voie mettant uniquement en œuvre un procédé de « CVD/CVI ».

L'étape finale de CVD/CVI est là pour densifier, réellement donner une tenue mécanique au matériau final.

Ainsi, la porosité microscopique est généralement supérieure à 90% avant l'étape de CVD/CVI, et elle est inférieure à 15% (mesurée par porosité à l'eau ou par pycnomètrie à l'hélium) après cette dernière étape de CVD/CVI.

Plusieurs avantages de techniques de CVD/CVI peuvent être cités :

- grande pureté des matériaux déposés ;
- contrôle de la stœchiométrie et de la composition des dépôts et par conséquent leurs propriétés ;
- la possibilité d'obtenir des dépôts sur des pièces de formes complexes.

De préférence, comme on l'a déjà précisé plus haut, lors de l'étape a) du procédé selon l'invention, ou première étape, la préforme en un polymère organique, notamment en un polymère thermoplastique, peut être fabriquée par un procédé de fabrication additive tel qu'un procédé d'impression 3D de fil fondu.

L'impression 3D de fil en matière plastique pour élaborer des pièces aux géométries complexes est un procédé en plein développement. Ce procédé est simple et peu coûteux et permet d'élaborer toutes les géométries même les plus complexes par fusion couche à couche d'un fil extrudé au-travers d'une buse chauffante.

Un procédé de fabrication additive tel qu'un un procédé d'impression 3D de fil fondu permet de fabriquer des préformes possédant toutes sortes de géométries, même très complexes, à un faible coût.

Le procédé de fabrication additive tel que le procédé d'impression 3D de fil fondu permet même de fabriquer des préformes qui, du fait de l'extrême complexité de leur géométrie, ne pourraient pas être fabriquées par un autre procédé.

*A fortiori*, la combinaison d'un procédé de fabrication additive tel qu'un procédé d'impression 3D de fil fondu, d'une étape de « PIP » et d'une étape de « CVD/CVI » n'a jusqu'alors jamais été décrite ou suggérée et permet pour la première fois d'obtenir des pièces consolidées, densifiées, en céramique ou en carbone, de géométrie complexe qui peuvent généralement résister à des températures élevées, qui possèdent généralement de bonnes propriétés mécaniques, une bonne tenue mécanique.

Autrement dit, le procédé selon l'invention relève avec succès le défi de la transformation d'une préforme (préparée notamment par un procédé de fabrication additive tel qu'un procédé d'impression 3D de fil fondu) en un polymère organique (tel qu'un polymère thermoplastique), en une pièce en céramique ou en carbone dense ayant une bonne tenue mécanique ayant la même géométrie que la préforme.

Cette transformation est réalisée, de manière surprenante en traitant la préforme lors d'une étape de « PIP » puis lors d'une étape de « CVD/CVI ».

D'autres caractéristiques et avantages de l'invention apparaîtront mieux à la lecture de la description détaillée qui suit d'un mode de réalisation. Cette description détaillée est faite à titre illustratif et non limitatif, en liaison avec les dessins joints.

**BRÈVE DESCRIPTION DES DESSINS.**

- La Figure 1 montre différentes structures gyroïdes suivant la valeur de « t » choisie, à savoir t = 0,5 (A) ; t = 0,8 (B) ; t = 1,1 (C) ; t = 1,4 (D).
- Les Figures 2A, 2B, et 2C présentent des images en tomographie-X d'une coupe transversale d'une structure gyroïde aux différents stades du procédé selon l'invention, dit procédé de céramisation, pour obtenir l'échantillon 1 dans l'exemple 1.

  La Figure 2A est l'image de la structure gyroïde brute, en PLA, obtenue après l'impression 3D (image post impression 3D).
  La Figure 2B est l'image de la structure gyroïde obtenue après l'étape de pyrolyse de la résine RS101 (image post pyrolyse).
  La Figure 2C est l'image de la structure gyroïde obtenue après l'étape de dépôt chimique en phase vapeur CVD (image post CVD).
  La Figure 2C montre également, en bas à droite, une image agrandie d'une portion encadrée en pointillé de l'image de cette Figure.

    L'échelle portée sur la Figure 2A représente 5 mm.

    L'échelle portée sur la Figure 2B représente 5 mm.

    L'échelle portée sur la Figure 2C représente 5 mm.

    L'échelle portée sur l'image agrandie de la Figure 2C représente 1 mm.

- Les Figures 3A, 3B, et 3C présentent des images en tomographie-X d'une coupe transversale d'une structure gyroïde aux différents stades du procédé selon l'invention, dit procédé de céramisation, pour obtenir l'échantillon 2 dans l'exemple 2.

  La Figure 3A est l'image de la structure gyroïde brute, en PLA, obtenue après l'impression 3D (image post impression 3D).
  La Figure 3B est l'image de la structure gyroïde obtenue après l'étape de pyrolyse de la résine SMP 10 (image post pyrolyse).
  La Figure 3B, montre également, en bas à gauche, une image macroscopique de la structure gyroïde.
  La Figure 3C est l'image de la structure gyroïde obtenue après l'étape de dépôt chimique en phase vapeur CVD (image post CVD).
  La Figure 3C, montre également, à droite, en haut, une image macroscopique de la structure gyroïde.
  La Figure 3C montre aussi, à droite en bas une image agrandie d'une portion encadrée en pointillé de l'image de cette Figure.

    L'échelle portée sur la Figure 3A représente 5 mm.

    L'échelle portée sur la Figure 3B représente 5 mm.

    L'échelle portée sur la Figure 3C représente 5 mm.

- Les Figures 4A et 4B présentent des images au Microscope électronique à balayage à électrons secondaires (MEB) (SE), à deux grossissements différents, de la structure obtenue après l'étape de pyrolyse dans l'exemple 2 pour préparer l'échantillon 2 (FIG. 3B).

  L'échelle portée sur la Figure 4A représente 500 $\mu$m.

L'échelle portée sur la Figure 4B représente 100 μm.

- La Figure 5 présente une image au Microscope électronique à balayage (MEB) (SE) de la structure en POROLAY® obtenue après trempage dans l'eau dans l'exemple 3 et l'exemple 4. L'échelle portée sur la Figure 5 représente 500 μm.
- Les Figures 6A, 6B, et 6C présentent des images au Microscope électronique à balayage (MEB) (SE), de la surface de la structure gyroïde obtenue après l'étape de pyrolyse de la résine RS101 dans l'exemple 3 pour préparer l'échantillon 3.

La Figure 6A est une vue d'une paroi de la gyroïde.
Les Figures 6B et 6C montrent quelques microporosités présentes sur l'échantillon.

L'échelle portée sur la Figure 6A représente 1 mm.

L'échelle portée sur la Figure 6B représente 400 μm.

L'échelle portée sur la Figure 6C représente 100 μm.

- Les Figures 7A, 7B, et 7C présentent des images au Microscope électronique à balayage (MEB) (SE), de la surface de la structure gyroïde obtenue après l'étape de dépôt de SIC par CVD, dans l'exemple 3 pour préparer l'échantillon 3.

L'échelle portée sur la Figure 7A représente 1 mm.

L'échelle portée sur la Figure 7B représente 200 μm.

L'échelle portée sur la Figure 7C représente 40 μm.

- Les Figures 8A et 8B présentent des images en tomographie-X d'une coupe transversale d'une structure gyroïde aux différents stades du procédé selon l'invention, dit procédé de céramisation, pour obtenir l'échantillon 3 dans l'exemple 3.

La Figure 8A est l'image de la structure gyroïde obtenue après l'étape de pyrolyse de la résine RS101 (image post pyrolyse).
La Figure 8B est l'image de la structure gyroïde obtenue après l'étape de dépôt chimique en phase vapeur CVD (image post CVD).
La Figure 8B montre aussi, en bas, à gauche une image agrandie d'une portion encadrée en pointillés de l'image de cette Figure.

L'échelle portée sur la Figure 8A représente 2 mm.

L'échelle portée sur la Figure 8B représente 2 mm.

L'échelle portée sur l'image agrandie de la Figure 8B représente 1 mm.

- Les Figures 9A, 9B, et 9C présentent des images au Microscope électronique à balayage (MEB) (SE), de la surface de la structure gyroïde obtenue après l'étape de pyrolyse de la résine SMP10 dans l'exemple 4 pour préparer l'échantillon 4.

Les Figures 9A et 9B mettent en évidence des craquelures du résidu céramique.
La Figure 9C est un gros plan (« zoom ») d'une craquelure.

L'échelle portée sur la Figure 9A représente 1 mm.

L'échelle portée sur la Figure 9B représente 500 μm.

L'échelle portée sur la Figure 9C représente 100 μm.

- Les Figures 10A, 10B et 10C présentent des images en tomographie-X d'une coupe transversale d'une structure

gyroïde aux différents stades du procédé selon l'invention, dit procédé de céramisation, pour obtenir l'échantillon 4 dans l'exemple 4.

La Figure 10A est l'image de la structure gyroïde obtenue après l'étape de pyrolyse de la résine SMP10 (image post pyrolyse).
Les Figures 10B et 10C sont des images de la structure gyroïde obtenue après l'étape de dépôt chimique en phase vapeur CVD (image post CVD).
La Figure 10C est une image agrandie d'une portion encadrée en pointillés de la Figure 10B.

L'échelle portée sur la Figure 10A représente 3 mm.

L'échelle portée sur la Figure 10B représente 3 mm.

L'échelle portée sur la Figure 10C représente 500 μm.

## EXPOSÉ DÉTAILLÉ DE MODES DE RÉALISATION PARTICULIERS

Le procédé selon l'invention est un procédé de fabrication d'une pièce en une première céramique ou en carbone, consolidée par une deuxième céramique, possédant une géométrie déterminée, dans lequel on réalise les étapes successives a), b), c) énumérées plus haut.

Comme on l'a déjà exposé, on peut aussi considérer que le procédé selon l'invention comprend, pour simplifier trois étapes successives, consécutives pour obtenir finalement la pièce souhaitée, à savoir : une première étape de fabrication d'une préforme en un polymère organique, notamment en un polymère organique thermoplastique, possédant la même géométrie que la pièce à fabriquer; une deuxième étape de transformation de cette préforme en un polymère organique en une pièce en une première céramique ou en carbone possédant la même géométrie que la pièce à fabriquer, cette deuxième étape pouvant être qualifiée d'étape de « *PIP* » (« *Polymer Impregnation and Pyrolysis* ») ; et enfin une troisième étape de consolidation, densification par un procédé de dépôt chimique en phase vapeur (« *Chemical Vapour Déposition* » ou « *CVD* » en anglais) ou un procédé d'infiltration chimique en phase vapeur (« *Chemical Vapour Infiltration* » ou « *CVI* » en anglais).

Dans l'étape a) du procédé selon l'invention, on fabrique une préforme en un polymère organique notamment en un polymère organique thermoplastique, la préforme possédant la même géométrie que la pièce à fabriquer.

Cette étape de fabrication comprend généralement la mise en forme d'un matériau en un polymère organique notamment en un polymère organique thermoplastique (matière plastique) afin d'obtenir une préforme en un polymère organique possédant une géométrie déterminée qui est la même géométrie que la pièce à fabriquer.

Il n'existe aucune limitation sur la géométrie que peut posséder cette préforme.

Cette géométrie peut être une géométrie complexe telle que définie plus haut.

Il n'existe également aucune limitation sur la taille de cette pièce si ce n'est celle dictée par la taille des enceintes de « *CVD/CVI* ».

Cette préforme peut être fabriquée par tout procédé connu de mise en forme d'un polymère organique, notamment d'un polymère organique thermoplastique.

Cependant, selon l'invention, la préforme en un polymère organique, notamment en un polymère organique thermoplastique, peut être avantageusement fabriquée par un procédé de fabrication additive.

Parmi les procédés de fabrication additive, on peut citer notamment les procédés de fusion ou frittage sur lit de poudre (« *Power Bed Fusion or Sintering* » en anglais), et les procédés d'impression 3D de fil fondu.

Les procédés de fusion ou frittage sur lit de poudre comprennent notamment les techniques de Frittage sélectif par Laser (« *Selective Laser Sintering* » en anglais), de Fusion sélective par Laser (« *Selective Laser Melting* »), de Fusion par faisceau Laser (« *Beam Laser Melting* »), et de fusion par faisceau d'électrons (« *Electron Beam Melting* »).

De préférence, selon l'invention, le procédé de fabrication additive est un procédé d'impression 3D de fil fondu.

Dans ce procédé, un fil en polymère organique thermoplastique est fondu et extrudé à travers une buse. Ce procédé est aussi appelé Dépôt de fil fondu (« *Fused Deposition Modeling* » ou « *FDM* » en anglais).

Avantageusement, le polymère thermoplastique peut être choisi parmi les acides polylactiques (PLA), les polycarbonates, les polyamides, les poly(chlorure de vinyle) (PVC), les acrylonitrile-butadiène-styrène (ABS), les polymères élastomères thermoplastiques tels que les polymères élastomères thermoplastiques de polyuréthane, et leurs mélanges.

Avantageusement, la préforme en un polymère organique thermoplastique peut présenter une porosité, notamment une microporosité.

Cette microporosité peut être générée préalablement ou postérieurement à la fabrication de la pièce.

Dans le cas où la microporosité de la préforme est générée postérieurement à la fabrication, on peut procéder

de la manière suivante : on fabrique une préforme en un mélange de deux polymères, l'un de ces polymères, étant soluble dans un solvant donné tel que l'eau, et l'autre polymère n'étant pas soluble dans ce solvant tel que l'eau.

Par exemple, le polymère soluble dans l'eau peut être l'alcool polyvinylique et l'autre polymère, insoluble dans l'eau peut être un polymère élastomère insoluble dans l'eau.

Ensuite, la préforme est trempée, immergée dans ledit solvant, par exemple dans l'eau, pendant une durée suffisante, par exemple de 48 à 96 heures, pour que le polymère soluble dans ce solvant, tel que de l'eau, soit dissout, moyennant quoi une microporosité est générée au sein de la préforme, et on obtient finalement une préforme microporeuse essentiellement constituée par le polymère insoluble dans le solvant.

Dans l'étape b) du procédé selon l'invention, on imprègne la préforme en un polymère organique, notamment en un polymère organique thermoplastique, par une résine précurseur de la première céramique ou bien par une résine précurseur du carbone. La résine précurseur de la première céramique peut être dénommée résine précéramique.

Si l'on souhaite fabriquer une pièce en une première céramique, on utilise une résine précurseur de la première céramique, ou bien, si l'on souhaite fabriquer une pièce en carbone, on utilise une résine précurseur du carbone.

L'homme du métier peut facilement déterminer la résine précurseur à utiliser en fonction de la première céramique que l'on souhaite obtenir qui peut être choisie parmi les céramiques oxydes, les céramiques nitrures, et les céramiques carbures telles que le carbure de silicium, le carbure de titane, le carbure de zirconium, le carbure de hafnium, et le carbure de tantale.

Par exemple, si la première céramique est le carbure de silicium SIC, la résine précurseur de la première céramique peut être choisie parmi les résines polycarbosilanes comme l'allylhydridopolycarbosilane (AHPCS).

La résine précurseur du carbone peut être choisie par exemple parmi les résines phénoliques, notamment les résines formo-phénoliques.

Pour l'imprégnation, la préforme est généralement simplement trempée, immergée dans la résine précurseur de la première céramique pure, ou la résine précurseur du carbone pure, notamment si ces résines sont liquides à la température ambiante, ou bien ces résines peuvent être diluées dans un solvant.

La résine se dépose sur les surfaces de la préforme en un polymère organique, notamment en un polymère organique thermoplastique, c'est-à-dire sur les surfaces externes (visibles), et les surfaces internes (hormis la porosité), et éventuellement à l'intérieur de la porosité, notamment de la microporosité éventuelle, et permet après réticulation et pyrolyse d'obtenir une structure en une première céramique ou en carbone.

Dans l'étape c) du procédé selon l'invention, on réticule puis on pyrolyse la résine précurseur de la première céramique (résine précéramique) ou la résine précurseur du carbone.

La réticulation peut être réalisée à une température dite température de réticulation, de 150°C à 180°C, par exemple à une température de 170°C ou 160°C, maintenue pendant une durée de 3 à 4 heures, par exemple de 3 heures. En d'autres termes, on observe un palier à la température de réticulation pendant la durée susmentionnée.

Ce palier à la température de réticulation peut être atteint en observant une ou plusieurs rampes de montée en température, par exemple depuis la température ambiante ou depuis 100°C.

Cette rampe ou ces rampes peut (peuvent) avoir des pentes identiques ou différentes allant par exemple de 0,2°C/minute à 0,5°C/minute. Par exemple, on peut observer une rampe avec une pente de 0,4°C/minute depuis la température ambiante (20°C) ou depuis 100°C jusqu'à atteindre par exemple 165°C.

La réticulation peut être réalisée sous air, ou sous un gaz inerte tel que l'azote ou l'argon si la résine est sensible à l'air.

La pyrolyse peut être réalisée à une température dite température de pyrolyse, de 800°C à 1100°C, par exemple à une température de 850°C ou 1000°C, maintenue pendant une durée de 0 à 2 heures, par exemple de 1 heure. En d'autres termes, on observe un palier à la température de pyrolyse pendant la durée susmentionnée.

Ce palier à la température de pyrolyse peut être atteint en observant une ou plusieurs rampes de montée en température, par exemple depuis la température ambiante (20°C).

Cette rampe ou ces rampes peut (peuvent) avoir des pentes identiques ou différentes allant de 1°C/minute à 5°C/minute. Par exemple, on peut observer une rampe de montée en température avec une pente de 5°C /minute depuis la température ambiante (20°C) jusqu'à 150°C, puis une rampe de montée en température avec une pente de 1°C/minute depuis 150°C jusqu'à 600°C, puis une rampe de montée en température avec une pente de 5°C/minute jusqu'à 850°C, on peut observer ensuite immédiatement (le palier est donc de 0 minute) une rampe de descente en température jusqu'à la température ambiante (20°C) avec une pente de 20°C/minute.

La pyrolyse est généralement réalisée sous une atmosphère de gaz inerte, tel que l'azote ou l'argon pour éviter toute oxydation du carbone ou de la céramique, telle que le SiC, à haute température.

La succession des étapes b) et c) peut être répétée de 1 à n fois, avec par exemple n = 10, moyennant quoi, à l'issue de l'étape c) ou de l'étape d), on obtient une pièce en une première céramique ou en carbone possédant la même géométrie que la pièce à fabriquer.

L'étape dite de transformation regroupe les étapes b) et c) d'imprégnation, réticulation et pyrolyse et éventuellement d) du procédé revendiqué. Cette étape peut être qualifiée d'étape de « *PIP* » (« *Polymer Impregnation and*

*Pyrolysis* »). Cette étape permet de passer d'une préforme en polymère organique, par exemple en polymère organique thermoplastique à une pièce de même géométrie mais en matière inorganique, en céramique, ou en carbone. En effet, lors de cette étape de transformation, le polymère organique est totalement éliminé, décomposé, et il ne reste plus à l'issue de cette étape qu'un squelette en céramique ou en carbone mais possédant la même géométrie que la préforme et que la pièce finale à fabriquer.

Cependant, la pièce en une première céramique ou en carbone possédant la même géométrie que la pièce à fabriquer obtenue à l'issue de l'étape c) ou de l'étape d) reste généralement très friable, même si l'on effectue plusieurs successions d'étapes b) et c). Il faut donc la consolider, la densifier, et c'est ce qui est réalisé lors de l'étape finale e) du procédé selon l'invention.

Lors de l'étape e), on dépose la deuxième céramique, dite céramique de consolidation ou de densification sur la pièce en une première céramique ou en carbone obtenue à l'issue de l'étape c) ou de l'étape d), par un procédé de dépôt chimique en phase vapeur (« *Chemical VapourDeposition* » ou « *CVD* » en anglais) ou un procédé d'infiltration chimique en phase vapeur (« *Chemical Vapour Infiltration* » ou « *CVI* » en anglais).

Par dépôt sur la pièce, on entend qu'un dépôt de la deuxième céramique est réalisé sur toutes les surfaces externes et internes hors porosité, par exemple microporosité, de la pièce et éventuellement à l'intérieur de la porosité éventuelle. Ce dépôt peut avoir une épaisseur de 1 à 200 microns, par exemple de 100 microns. Ce dépôt permet de consolider la pièce et de la densifier.

La deuxième céramique de consolidation peut être choisie parmi les céramiques oxydes, les céramiques nitrures, et les céramiques carbures, de préférence, la deuxième céramique de consolidation peut être choisie parmi le carbure de silicium, le carbure de titane, le carbure de zirconium, le carbure de hafnium, et le carbure de tantale.

De préférence, la pièce est en une première céramique et la deuxième céramique est identique à la première céramique telle que le SiC. La pièce finale fabriquée peut être alors considérée comme un monolithe en une seule céramique.

La densité de cette pièce finale peut être par exemple de 3,1 g/cm$^3$ soit 97% de la densité théorique pour une pièce en SiC.

Les conditions de procédé de « *CVD/CVI* » peuvent être facilement déterminées par l'homme du métier selon la deuxième céramique que l'on souhaite déposer et selon l'importance, l'épaisseur du dépôt que l'on souhaite réaliser.

Ainsi, notamment, la température du four, la durée de réaction, la pression totale, la nature du ou des précurseurs, le débit du ou des précurseurs, et le débit d'hydrogène peuvent être facilement déterminés par l'homme du métier en fonction de la deuxième céramique que l'on souhaite déposer et selon l'importance du dépôt que l'on souhaite réaliser.

Par exemple, dans le cas où la deuxième céramique est du SiC, le précurseur est le MéthylTrichloroSilane (MTS).

La pièce finale obtenue est dense, c'est à dire que sa porosité (mesurée par porosité à l'eau ou par pycnomètrie à l'hélium) est inférieure à 15% de la densité théorique, et elle est consolidée, c'est-à-dire qu'elle n'est pas cassante, friable et qu'elle présente de bonnes propriétés mécaniques, par exemple proches du SiC monolithique, et une résistance aux températures élevées.

En effet, c'est la dernière étape de CVD qui donne à la pièce la totalité de la résistance finale.

L'invention va maintenant être décrite en référence aux exemples suivants donnés à titre illustratif et non limitatif.

## EXEMPLES.

Dans les exemples qui suivent, quatre échantillons, à savoir quatre pièces en céramique possédant une géométrie complexe ont été préparées par le procédé selon l'invention.

Dans le Tableau 1, est indiquée l'architecture, géométrie de la préforme, structure initiale en un matériau polymère thermoplastique. Cette architecture, géométrie est la même que celle de la pièce finale en céramique.

La structure initiale qui est préparée dans les exemples qui suivent, par impression 3D est une structure gyroïde qui sera décrite en détail plus loin.

Une telle structure gyroïde présente la particularité d'avoir une géométrie très complexe, impossible à réaliser autrement que par impression 3D.

Dans le Tableau 1, est également précisée la nature du matériau thermoplastique constituant le fil utilisé pour la préparation de la préforme par impression 3D lors de l'étape a) du procédé selon l'invention.

Deux types de fils ont été utilisés, à savoir un fil plastique classique en acide polylactique PLA pour les échantillons 1 et 2, et un fil microporeux en POROLAY (Mélange de PVA et d'un élastomère) pour les échantillons 3 et 4. On verra que c'est avec ce dernier que les meilleurs résultats ont été obtenus.

Dans le Tableau 1, on a mentionné, en outre, la nature de la résine précurseur de céramique, ou résine de transformation ou d'imprégnation mise en œuvre dans l'étape b) du procédé selon l'invention.

Dans le Tableau 1, on a enfin indiqué les conditions de l'étape de consolidation ou densification, à savoir de l'étape e) du procédé selon l'invention.

Tableau 1.

| N° échantillon | 1 | 2 | 3 | 4 |
|---|---|---|---|---|
| Architecture | Gyroïde | Gyroïde | Gyroïde | Gyroïde |
| Nature du fil d'impression 3D | PLA | PLA | POROLAY | POROLAY |
| Résine de transformation | RS101 (précurseur de C) | SMP10 (précurseur de SiC) | RS101 (précurseur de C) | SMP10 (précurseur de SiC) |
| Etape de consolidation | CVD/CVI de SiC | CVD/CVI de SiC | CVD/CVI de SiC | CVD/CVI de SiC |
| Description des Matériels, structures, matières et méthodes mis en œuvre dans les exemples. | | | | |

1. Structure mise en jeu: la structure gyroïde.

Les structures gyroïdes sont des surfaces minimales triplement périodiques (dont la courbure moyenne est nulle). Elles appartiennent au groupe d'espace cubique Ia-3d et forment des structures poreuses ayant la topologie d'une mousse à cellules ouvertes. L'utilisation de ces structures passe nécessairement par la compréhension de leur géométrie et de leurs propriétés.

Si l'on s'intéresse à la géométrie des gyroïdes, leur structure peut être décrite de manière approximative par les équations (1) et (2) suivantes :

$$F(x,y,z) = t \qquad (1)$$

où

$$F(x, y, z) = \sin\left(\frac{2\pi x}{a}\right)\cos\left(\frac{2\pi y}{a}\right) + \sin\left(\frac{2\pi y}{a}\right)\cos\left(\frac{2\pi z}{a}\right) + \sin\left(\frac{2\pi z}{a}\right)\cos\left(\frac{2\pi x}{a}\right) \qquad (2)$$

où « $a$ » est la périodicité de la structure gyroïde et « *t* » une constante appartenant à l'intervalle $-1{,}5 < t < 1{,}5$. Selon la valeur de « *t* », la forme et les propriétés de la structure varient. Ainsi, plus la valeur de « *t* » est élevée, plus la porosité est importante, comme le montrent les Figures 1A, 1B, 1C, et 1D où sont représentées des gyroïdes avec des valeurs de « t » respectivement de 0,5 (Fig. 1A) ; 0,8 (Fig. 1B) ; 1,1 (Fig. 1C) ; et 1,4 (Fig. 1D) . La porosité est minimale pour une valeur de t = 0. Dans ce cas-là, il y a autant de vide que de matière et les volumes vides et solides ont la même géométrie. Pour chaque nœud de la structure, la connexion est de trois. Selon les directions (100) ou (111), on observe différentes familles de canaux parallèles probablement associés à une perméabilité élevée. Leur courbure permettrait d'avoir une meilleure souplesse qu'un simple treillis ainsi qu'une bonne résistance aux chocs thermiques et aux gradients.

2. Matières premières.

2.1. Fil classique en acide polylactique (PLA) utilisé pour l'impression 3D.

Dans le cas des échantillons 1 et 2, la structure, préforme initiale est imprimée en utilisant un fil de PLA (acide polylactique) commercial. Ce fil est produit par la société Ultimaker®. Il s'agit de PLA blanc dont le diamètre est de 1,75 mm. Dans ce cas, les structures, préformes préparées par impression 3D ne sont pas trempées dans l'eau, car il n'y a pas de microporosité à révéler.

2.2. Fil microporeux utilisé pour l'impression 3D.

Le fil d'impression 3D utilisé dans le cas des échantillons 3 et 4, pour la mise en forme de structures gyroïdes est un fil commercial poreux disponible sous la dénomination Fil 3D POROLAY Layfomm. Le diamètre du fil est de 1,75 mm. Le fil est composé de deux parties : une première partie constituée d'un polymère élastomère non identifié et une seconde partie constituée par de l'alcool polyvinylique (PVA). Ce dernier a la particularité d'être soluble dans l'eau,

créant ainsi une microporosité contrôlée ainsi que des propriétés de flexibilité après rinçage du fil en milieu aqueux.

2.3. Résine précéramique formo-phénolique utilisée pour l'imprégnation.

La résine d'imprégnation permettant d'obtenir un résidu carboné après pyrolyse est dans le cas des échantillons 1 et 3, la résine dénommée ABLAPHENE RS 101® disponible auprès de la société Rhodia®. Il s'agit d'une résine formo-phénolique, liquide à température ambiante, et relativement visqueuse (500 mPa.s à 20°C). On peut utiliser cette résine pure (dans le cas de l'échantillon 1) mais elle peut aussi être diluée dans l'éthanol (dans le cas de l'échantillon 3).

2.4. Résine précéramique polycarbosilane utilisée pour l'imprégnation.

Dans les cas des échantillons 3 et 4, la résine d'imprégnation permettant d'obtenir un résidu céramique après pyrolyse est une résine précéramique thermodurcissable, dérivée du polycarbosilane. Cette résine permet l'obtention d'une céramique amorphe après une étape de polymérisation suivie d'une pyrolyse sous atmosphère inerte.

Cette résine, dénommée SMP-10, et conduisant après pyrolyse à du carbure de silicium (SiC) pur, est disponible auprès de la société Starfire System®. Il s'agit d'allylhydridopolycarbosilane (AHPCS). Sa formule chimique théorique est représentée ci-dessous.

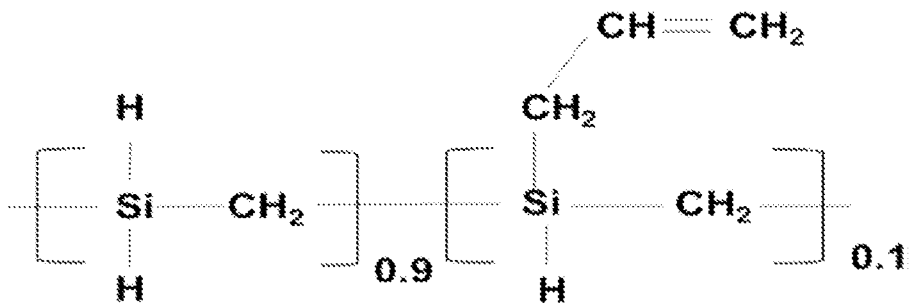

La résine SMP-10 est liquide à température ambiante et sa masse volumique est d'environ 1 g/L. A partir des derniers lots de résine commerciale, il n'est pas rare d'obtenir un pourcentage non négligeable de carbone libre dans la céramique obtenue après pyrolyse. Le rapport atomique Si/C après pyrolyse de la résine SMP-10 est de 0,738. Cette résine est utilisée pure.

3. Paramètres d'élaboration de la préforme par impression 3D - Etape a) du procédé selon l'invention.

3.1. Fichier d'impression 3D.

A partir des équations caractéristiques décrivant la forme gyroïde (Équations (1) et (2) données plus haut), le logiciel SolidWork® est utilisé pour générer la structure désirée et créer un fichier d'impression 3D qui est enregistré. La structure gyroïde choisie est définie par l'équation (1), pour une valeur de t = 0,8. Après exportation du fichier dans une imprimante 3D, la structure est ensuite imprimée au moyen de cette imprimante.

3.2. Imprimante 3D.

L'imprimante 3D utilisée est une imprimante Ultimaker® 2Go. La résolution maximale est de 20 microns, le volume d'impression est de : 120 mm x 120 mm x 115 mm. La vitesse maximale d'impression est de 300 mm/s. Le fil de PLA ainsi que celui de polymère microporeux POROLAY sont facilement adaptables sur ce type de machine. Les caractéristiques de l'imprimante et les paramètres d'impression sont résumés dans le Tableau 2 ci-dessous.

Tableau 2 : Caractéristiques de l'imprimante et paramètres d'impression 3D.

| Caractéristiques de l'imprimante | Valeurs |
|---|---|
| Temps d'impression | 1h 31min 46s |
| Nombre de couches | 146 |
| Nombre total de lignes | 155908 |

(suite)

| Caractéristiques de l'imprimante | Valeurs |
|---|---|
| Filament nécessaire (mm) | 6166 |
| | |
| Paramètres d'impression | Valeurs |
| Diamètre du fil (mm) | 1,75 |
| Hauteur de couches (mm) | 0,3 |
| Taux de remplissage (%) | 20 |
| Vitesse moyenne (mm/s) | 6 |

3.3. Trempage de la structure imprimée dans de l'eau (uniquement pour les échantillons 3 et 4).

Afin de révéler la microporosité de la structure imprimée dans le cas des échantillons 3 et 4, en PVA microporeux, un bécher et une quantité suffisante d'eau sont nécessaires. Les structures sont totalement immergées dans l'eau et cette dernière est remplacée toutes les 12 h afin d'éliminer au mieux le PVA.

Les résines d'imprégnation utilisées dans l'étape suivante (RS101 et SMP10) sont miscibles dans l'éthanol. Avant imprégnation par la résine, les structures sont donc trempées dans un bécher d'éthanol, afin d'éliminer le surplus d'eau.

4. Paramètres de l'étape d'imprégnation par la résine précéramique - Etape b) du procédé selon l'invention.

4.1. Méthode d'imprégnation.

La méthode utilisée pour réaliser l'imprégnation par la résine précéramique est relativement simple à mettre en œuvre. L'échantillon est maintenu par un fil d'acier, placé entre les macropores de la structure. La résine est placée dans un bêcher. La structure est trempée dans la résine, puis le surplus de résine est éliminé par simple égouttage. On ne place pas la structure sous vide.

La quantité de résine imprégnée au sein de la structure est déterminée par simple pesée des échantillons avant imprégnation et après égouttage.

4.2. Etuve utilisée pour la réticulation de la résine.

Afin de réaliser la réticulation de la résine, une étuve Venticell® est utilisée. Cette étuve peut chauffer les échantillons jusqu'à 250°C sous air. Les échantillons sont simplement posés sur une plaque en aluminium.

La variation de masse due au phénomène de durcissement de la résine ainsi qu'à l'évaporation du solvant est déterminée par simple pesée des structures avant et après réticulation.

4.3. Four de pyrolyse.

Pour réaliser la pyrolyse des échantillons, on utilise un four tubulaire horizontal disponible auprès de la société CERHEC dont la température maximale de travail est de 1150°C. Ce four est doté de deux zones chaudes dont la température peut être contrôlée séparément. La pyrolyse est réalisée sous atmosphère d'azote (99,999% de pureté). Le four est équipé d'éléments chauffants en alumine (bon conducteur thermique) disposés tout autour du tube de travail. Ce tube est réalisé sur mesure en silice pure. Un logiciel permet de programmer le cycle thermique choisi. La température est contrôlée grâce à un thermocouple disposé entre le tube de travail et les éléments chauffants. La température maximale de travail est de 1150°C, mais il est préférable de ne pas dépasser 1100°C. Une pompe à palette permet de faire le vide avant remplissage du tube avec de l'azote. Le rendement de la pyrolyse est calculé par pesée des échantillons avant et après traitement thermique.

4.4. Four, réacteur de CVI/CVD.

Le réacteur choisi pour les traitements CVD est composé de quatre parties indépendantes :

- un système d'introduction des gaz réactifs ($H_2$ et Méthyltrichlorosilane (MTS)) au sein du réacteur.
- un système de chauffage du réacteur ou four résistif (température maximale de 1500 °C).
- un réacteur vertical.
- un système de pompage en aval du réacteur ainsi que des pièges cryogéniques.

Le réacteur conçu est donc l'assemblage de différents constituants permettant l'injection du mélange gazeux, la mise en place d'un substrat de taille et de géométrie désirée au sein du réacteur, et la réalisation de dépôt de carbures.
Le réacteur utilisé est composé de ces différents éléments qui sont nécessaires à la réalisation de dépôts par CVD.
Le four résistif dont la température maximale est de 1500°C permet le chauffage des échantillons au sein du réacteur.
La réaction en voie gazeuse se produit dans un tube en SiC. Les deux extrémités du tube, constituées d'un système de joint torique, assurent l'étanchéité du réacteur, et sont munies d'un dispositif de refroidissement par eau (boucle fermée) et ventilateurs. Afin de maintenir un vide primaire, des systèmes de raccordement en acier inoxydable spécialement prévus pour l'introduction des gaz ($H_2$ et Méthyltrichlorosilane (MTS)) et leur évacuation sont installés aux entrée et sortie du réacteur. Les lignes de gaz comportent des débitmètres. Ceux de $H_2$ ont une gamme de débits qui s'étend de 0 à 300 sccm (« *standard cubic centimeters per minute* »). Celui de MTS a une gamme qui s'étend de 0 à 258 sccm.
L'introduction des gaz dans le four se fait grâce à des vannes manuelles et pneumatiques. Afin d'éviter au maximum la pollution engendrée par l'utilisation de gaz corrosifs, le bas du réacteur est raccordé à l'aide d'un tube flexible à des pièges cryogéniques (refroidis en cours d'expérience par de l'azote liquide). Une pompe à palettes placée en aval des pièges cryogéniques est raccordée à ces pièges à l'aide d'un tuyau en polymère armé. La pompe est surmontée d'une vanne à boisseau sphérique permettant son isolement et d'une vanne motorisée qui permet de réguler la pression du réacteur.

5. Résultats

Dans les exemples 1 à 4 qui suivent, on prépare 4 échantillons, pièces, 1, 2, 3, et 4, par le procédé selon l'invention.
Pour chaque échantillon testé, la plupart des conditions expérimentales sont identiques, à savoir :

- type de structure gyroïde,
- paramètres d'impression 3D,
- paramètres pour le traitement thermique,
- paramètres pour le traitement CVD.

Par contre, la nature des fibres, fils utilisés pour l'impression 3D est différente.
Il s'agit de fibres, fils en PLA pour préparer les échantillons 1 et 2, et de fibres en POROLAY pour préparer les échantillons 3 et 4.
De même, la résine d'imprégnation est différente.
Il s'agit d'une résine RS101 pour préparer les échantillons 1 et 3, et d'une résine SMP10 pour préparer les échantillons 2 et 4.

Exemple 1.

Dans cet exemple, on prépare un échantillon 1 par le procédé selon l'invention.
Cet échantillon 1 est aussi dénommé échantillon PLA - RS101 car il est préparé en utilisant des fils de PLA pour l'étape d'impression 3D de fabrication de la préforme, et une résine phénolique RS101 pour l'étape d'imprégnation.

Etape d'imprégnation.

Les préformes en PLA sont imprégnées par une résine phénolique, à savoir la résine RS101 pure, selon le protocole, décrit plus haut. La durée de l'imprégnation est de 1 minute.

Etape de réticulation.

L'imprégnation est suivie de la réticulation de la résine, dans l'étuve, à 170°C, sous air.

Etape de pyrolyse.

La réticulation est suivie de la pyrolyse de la résine, dans le four, Pour cela, on augmente la température du four à raison de 1°C/minute, jusqu'à atteindre 850°C. La pyrolyse est réalisée sous $N_2$, à 850°C pendant une durée de 1 heure.

On obtient ainsi un résidu carboné qui est ensuite renforcé par CVD rapide (vitesse de dépôt de 13 μm/heure) de SiC.

Etape de dépôt de SIC par CVD.

Cette étape est réalisée à une température de 1200°C et sous une pression de 100 mBars, pendant une durée de 6 heures, et avec un α de 3.

Le Méthyltrichlorosilane (MTS) est utilisé comme précurseur.

α est le rapport du débit d'hydrogène sur le débit de MTS.

Pour chaque étape du procédé, ou plutôt de la transformation, on mesure (en faisant le rapport de la masse sur le volume total, et en considérant le gyroïde comme un cube) la densité apparente macroscopique ρ*.

La densité apparente macroscopique ρ* de la préforme brute en PLA est de 0,25 $g/cm^3$.

La densité apparente macroscopique ρ* de la pièce obtenue à l'issue de la pyrolyse est 0,048 $g/cm^3$.

La densité apparente macroscopique ρ* de la pièce obtenue à l'issue de la CVD est de 0,31 $g/cm^3$, et comprend 80% en masse de SIC, ce qui montre bien qu'une densification est intervenue lors de l'étape de CVD du procédé selon l'invention.

Pour chaque étape du procédé, ou plutôt de la transformation, une tomographie-X avec une résolution de 20 μm permet de montrer la structure tridimensionnelle de la gyroïde.

Les Figures 2A, 2B, et 2C présentent donc des images en tomographie-X d'une coupe transversale d'une structure gyroïde aux différents stades du procédé selon l'invention, dit procédé de céramisation, pour obtenir l'échantillon 1 dans l'exemple 1.

On constate que la structure en PLA est très dense (FIG. 2A). L'épaisseur de la paroi ($e_{paroi}$) des gyroïdes est d'environ 1 mm. Lors de l'imprégnation, la résine phénolique ne s'infiltre pas au cœur des parois et recouvre seulement la surface spécifique de la structure. Il en résulte, après pyrolyse, un squelette prenant la forme du contour des parois de la gyroïde (FIG. 2B). Pour assurer une tenue mécanique acceptable, la résine phénolique doit être utilisée concentrée, ce qui donne une quantité non négligeable de carbone vitreux ex-pyrolyse (c'est-à-dire issu de la pyrolyse). Sachant que le carbone vitreux donne des espèces gazeuses en conditions oxydantes, il est nécessaire de minimiser sa proportion au sein du matériau final.

La résine ne s'étant pas infiltrée, la décomposition du PLA à haute température lors de la pyrolyse a laissé une épaisseur de vide assez importante (de l'ordre de l'épaisseur de la paroi initiale, soit environ 1 mm).

L'étape de CVD rapide permet de renforcer l'extérieur des parois en carbone, mais le SiC s'infiltre aussi sur les parois intérieures, montrant l'aspect poreux du carbone ex-pyrolyse.

Exemple 2.

Dans cet exemple, on prépare un échantillon 2 par le procédé selon l'invention.

Cet échantillon 2 est aussi dénommé échantillon PLA - SMP10 car il est préparé en utilisant des fils de PLA pour l'étape d'impression 3D de fabrication de la préforme, et une résine précéramique SMP10 pour l'étape d'imprégnation.

Dans cet exemple, afin de minimiser la quantité de carbone ex-pyrolyse et de combler plus efficacement par CVD les parois des structures, on remplace, dans l'étape d'imprégnation, la résine phénolique (RS101) par une résine précéramique, à savoir la résine SMP10.

La mise en œuvre de cette résine SMP10 a pour avantage qu'elle permet d'obtenir, après pyrolyse, un résidu céramique PDC (« *Polymer Derived Ceramics* ») extrêmement fragmenté, qui peut être plus facilement renforcé par CVD que la structure obtenue après pyrolyse de la résine phénolique dans l'exemple 1.

Etape d'imprégnation : Les préformes, structures gyroïdes en PLA sont imprégnées par la résine SMP10 pure, qui est beaucoup plus fluide que la résine phénolique RS101, selon le protocole décrit plus haut. La durée de l'imprégnation est de 1 minute.

Etape de réticulation : On procède ensuite à la réticulation de la résine, dans l'étuve, à 165°C, sous air, pendant une durée de 3 heures.

Etape de pyrolyse : La réticulation est suivie de la pyrolyse de la résine, dans le four. Pour cela, on augmente la température du four à raison de 1°C/minute, jusqu'à atteindre 1000°C. La pyrolyse est réalisée à 1000°C pendant une durée de 1 heure.

La résine est pyrolysée sous $N_2$ pour éviter toute oxydation du SiC à haute température.

On obtient alors un résidu précéramique amorphe qui est ensuite renforcé par CVD rapide de SiC, avec une vitesse de dépôt de 13 μm/heure.

Etape de dépôt de SiC par CVD.

Cette étape est réalisée à une température de 1200°C et sous une pression de 100 mBars, pendant une durée de 6 heures et avec un α de 3.

Le Méthyltrichlorosilane (MTS) est utilisé comme précurseur.

α est le rapport du débit d'hydrogène sur le débit de MTS.

Pour chaque étape du procédé, ou plutôt de la transformation, on mesure (en faisant le rapport de la masse sur le volume total, et en considérant le gyroïde comme un cube) la densité apparente macroscopique ρ*.

La densité apparente macroscopique ρ* de la préforme brute en PLA est de 0,11 g/$cm^3$.

La densité apparente macroscopique ρ* de la pièce obtenue à l'issue de la pyrolyse est 0,054 g/$cm^3$.

La densité apparente macroscopique ρ* de la pièce obtenue à l'issue de la CVD est de 0,56 g/$cm^3$, et comprend 84% en masse de SiC, ce qui montre bien qu'une densification est intervenue lors de l'étape de CVD du procédé selon l'invention.

Pour chaque étape du procédé, en d'autres termes de la transformation, une tomographie-X avec une résolution de 20 μm permet de montrer la structure tridimensionnelle de la gyroïde.

Les Figures 3A, 3B, et 3C présentent donc des images en tomographie-X d'une coupe transversale d'une structure gyroïde aux différents stades du procédé selon l'invention, dit procédé de céramisation, pour obtenir l'échantillon 2 dans l'exemple 2.

On observe également au Microscope électronique à balayage (MEB) (SE), la structure obtenue après l'étape de pyrolyse (FIG. 4A et 4B).

On constate que le résidu précéramique amorphe obtenu à l'issue de l'étape de pyrolyse a une géométrie similaire à l'objet, structure, gyroïde en PLA de départ (FIG. 3B et 4A, 4B).

On note que ce résidu précéramique amorphe présente cependant un retrait volumique d'environ 20%. Ceci est dû à l'évaporation d'oligomères et de sous-produits gazeux ($H_2$ en majorité) lors de la conversion en céramique. Ceci se traduit par une forte porosité après pyrolyse, sous forme de nombreuses craquelures au sein du squelette céramique (FIG. 4A) : elles engendrent une diminution de la résistance mécanique mais augmentent considérablement la surface sur laquelle peut se faire le dépôt de SiC par CVD.

De par l'importante surface spécifique développée par le squelette ex-PDC, les parois sont davantage renforcées après 6h de dépôt qu'avec l'utilisation de la résine phénolique RS101. Cependant, des zones vides (les plus grosses) n'ont pas pu être comblées en raison de leur grande taille. Les gaz ayant diffusé au sein des parois de la structure, leur renforcement externe est amoindri. Continuer le dépôt quelques heures supplémentaires (par exemple pendant 4 heures) permettrait sans doute un renforcement plus efficace des parois externes des gyroïdes.

Exemple 3.

Dans cet exemple, on prépare un échantillon 3 par le procédé selon l'invention.

Cet échantillon 3 est aussi dénommé échantillon POROLAY - RS101 car il est préparé en utilisant des fils de POROLAY pour l'étape d'impression 3D de fabrication de la préforme, et une résine phénolique RS101 pour l'étape d'imprégnation.

Après impression 3D avec du fil POROLAY, les structures, préformes gyroïdes sont plongées dans un bêcher rempli d'eau pendant 4 jours.

L'eau est remplacée toutes les 12 h afin d'éliminer au mieux le PVA qui est un des deux composants qui constitue le POROLAY. La dissolution du PVA permet de révéler la microporosité de la structure obtenue qui rend cette dernière très flexible. Cette structure est constituée par un élastomère qui est l'autre composant qui constitue le POROLAY.

Une image MEB (FIG. 5) après trempage dans l'eau permet de visualiser cette microporosité, favorable à l'imprégnation par la résine dans l'étape suivante du procédé.

Afin d'éliminer l'eau, la structure est ensuite trempée pendant une minute dans un bécher rempli d'éthanol. En effet, l'éthanol est un bon solvant de la résine formo-phénolique RS101. Le surplus d'éthanol est retiré grâce à du papier absorbant. L'échantillon est alors pesé, et la masse ainsi mesurée est dénommée $m_{avant\ imprégnation}$.

Etape d'imprégnation : L'étape suivante est l'imprégnation de la résine RS101 au sein de la microporosité.

La structure est trempée dans un bécher rempli de résine phénolique diluée (50% RS101 / 50 % EtOH) pendant 1 minute, puis le surplus de résine est éliminé par écoulement, pendant 1h. L'échantillon est alors pesé et la masse ainsi mesurée est dénommée $m_{après\ imprégnation}$.

Etape de réticulation.

On procède ensuite à la réticulation de la résine.

La réticulation de la résine et l'évaporation de l'éthanol se font sous air, dans l'étuve Venticell®. Le programme de température pour la réticulation de la résine est le suivant :

- Température de départ : 100°C.
- Rampe de température à raison de 0,4°C/minute, jusqu'à 165°C.
- Palier de température à 165°C pendant 3 heures.

L'échantillon est ensuite pesé et la masse ainsi mesurée est dénommée ($m_{après\ réticulation}$). Après réticulation, la déformation de la structure est légère et seulement orientée dans le sens du poids de l'échantillon. La résine formo-phénolique a durci.

Etape de pyrolyse.

Afin d'éliminer l'élastomère et d'obtenir un résidu carboné, la pyrolyse de l'échantillon est nécessaire.

La pyrolyse se fait sous atmosphère d'azote, selon le programme de température suivant :

- Température de départ : 20°C.
- Rampe de température à raison de 5°C/minute, jusqu'à 150°C.
- Rampe de température à raison de 1°C/minute, jusqu'à 600°C.
- Rampe de température à raison de 5°C/minute, jusqu'à 850°C.
- Refroidissement : Rampe de température descendante à raison de 20°C/minute, jusqu'à 20°C.

En effet, des travaux parallèles ont montré que la décomposition de l'élastomère se produit à des températures comprises entre 300°C et 320°C ; c'est pourquoi une rampe de montée en température lente (1°C/min) est mise en place entre 150°C et 600°C. Après pyrolyse, le résidu est pesé et la masse ainsi mesurée est dénommée ($m_{après\ pyrolyse}$).

Après pyrolyse, des images MEB de la surface de l'échantillon ont été réalisées et sont présentées sur les Figures 6A, 6B et 6C. On remarque que le résidu carboné est assez dense. Quelques microporosités peuvent être observées.

Le Tableau 3 résume l'ensemble des masses obtenues après chaque étape du procédé pour préparer l'échantillon 3.

Tableau 3 : Masses obtenues après chaque étape du procédé pour préparer l'échantillon 3.

| $m_{avant\ imprégnation}$ | $m_{après\ imprégnation}$ | $m_{après\ réticulation}$ | $m_{après\ pyrolyse}$ |
|---|---|---|---|
| 1,54 g | 2,62 g | 1,59 g | 0,21 g |

La pyrolyse engendre un retrait isotrope d'environ 20%. La forme de la structure initiale est maintenue. La structure se tient mais ses propriétés mécaniques apparentes semblent médiocres.

Etape de dépôt de SiC par CVD.

La dernière étape du procédé consiste à renforcer le matériau par une étape de dépôt de SiC par CVD, avec le MéthylTrichloroSilane (MTS) comme précurseur.

Les échantillons sont placés au centre du réacteur de CVD, et les conditions expérimentales choisies sont présentées dans le Tableau 4.

Tableau 4. Conditions expérimentales pour le traitement CVD.

| $T_{four}$ | $t_{réaction}$ | $P_{totale}$ | QMTS | $Q_{H2}$ |
|---|---|---|---|---|
| °C | h | mBar | Sccm* | Sccm* |
| 1200 | 6h | 100 | 200 | 600 |
| *sccm = débit en $cm^3$/min à 20°C et 1013 mbar. | | | | |

La durée du dépôt par CVD est de 6 heures.

Après CVD, l'échantillon est pesé et la masse ainsi mesurée est dénommée $m_{après\ CVD}$. Cette masse est de 1,17 g. 0,96 g de SiC a été déposé sur la structure, améliorant significativement les propriétés mécaniques apparentes.

Une observation au MEB de la surface du dépôt de SiC a été faite (FIG. 7A, 7B, et 7C).

Les Figures 7A et 7B montrent le dépôt de SiC sur toute la surface de la gyroïde.

La Figure 7C met en évidence la microstructure de SiC.

On note sur la Figure 7C une microstructure caractéristique d'un dépôt à haute température (1200 °C). SiC est très bien cristallisé comme le montre une analyse par spectroscopie Raman qui a été menée en parallèle.

Pour une analyse plus précise, les échantillons obtenus après l'étape de pyrolyse (échantillon post-pyrolyse) et après l'étape de CVD (échantillon post CVD) ont été tomographiés.

La Figure 8A est l'image en tomographie-X d'une coupe transversale de la structure gyroïde obtenue après l'étape de pyrolyse de la résine RS101 (image post pyrolyse).

La Figure 8B est l'image de la structure gyroïde obtenue après l'étape de dépôt chimique en phase vapeur CVD (image post CVD).

Après pyrolyse, on observe une imprégnation efficace de la résine phénolique (RS101) au sein des parois de la structure.

L'ouverture de la microporosité par dissolution du PVA a permis une pénétration en profondeur de la résine. La dilution de cette dernière dans l'éthanol permet de diminuer la viscosité et donc facilite l'imprégnation.

Exemple 4.

Dans cet exemple, on prépare un échantillon 4 par le procédé selon l'invention.

Cet échantillon 4 est aussi dénommé échantillon POROLAY - SMP10 car il est préparé en utilisant des fils de POROLAY pour l'étape d'impression 3D de fabrication de la préforme, et une résine SMP 10 pour l'étape d'imprégnation.

Le procédé de préparation de l'échantillon 4 est rigoureusement identique au procédé de préparation de l'échantillon 3 jusqu'à l'étape d'imprégnation par de la résine.

Dans cet exemple 4, la résine SMP10 est utilisée à la place de la résine RS101 qui était utilisée dans l'exemple 3.

Etape de réticulation et étape de pyrolyse.

Les étapes de réticulation et de pyrolyse sont réalisées de manière identique au procédé de l'exemple 3 pour préparer l'échantillon 3.

Lors de la réticulation dans l'étuve, la déformation est ici légèrement plus importante que lorsque l'on utilise une résine phénolique comme dans le procédé de l'exemple 3 pour préparer l'échantillon 3.

Lors de la pyrolyse, le retrait est isotrope et il est d'environ 20%.

Etape de dépôt de SiC par CVD.

L'étape de dépôt de SiC par CVD est réalisée de manière identique au procédé de l'exemple 3 pour préparer l'échantillon 3.

Les différentes masses obtenues après chaque étape de la transformation sont portées dans le Tableau 5 ci-dessous.

Tableau 5 : Masses obtenues après chaque étape du procédé pour préparer l'échantillon 4.

| $m_{avant\ imprégnation}$ | $m_{après\ imprégnation}$ | $m_{après\ réticulation}$ | $m_{après\ pyrolyse}$ | $m_{après\ CVD}$ |
|---|---|---|---|---|
| 1,65 g | 2,32 g | 1,99 g | 0,34 g | 1,79 g |

Une observation au MEB de la surface de la structure gyroïde obtenue après l'étape de pyrolyse de la résine SMP10 (échantillon post-pyrolyse) a été effectuée.

Les Figures 9A et 9B mettent en évidence des craquelures du résidu céramique (PDC).

La Figure 9C est un gros plan (« zoom ») d'une craquelure.

Après pyrolyse, la résine SMP10 a donc tendance à se craqueler (FIG. 9A, 9B, et 9C), diminuant la résistance mécanique apparente mais augmentant de façon considérable la surface sur laquelle peut se faire le dépôt CVD.

L'échantillon a été tomographié après pyrolyse et après renforcement CVD.

Les Figures 10A, 10B et 10C présentent des images en tomographie-X d'une coupe transversale d'une structure gyroïde aux différents stades du procédé selon l'invention, pour obtenir l'échantillon 4 dans l'exemple 4.

La Figure 10A est l'image de la structure gyroïde obtenue après l'étape de pyrolyse de la résine SMP10 (image post pyrolyse).

Les Figures 10B et 10C sont des images de la structure gyroïde obtenue après l'étape de dépôt chimique en phase vapeur CVD (image post CVD).

La Figure 10C est une image agrandie d'une portion encadrée de la Figure 10B.

Malgré une légère déformation après pyrolyse, la forme gyroïde initiale est conservée. Lors du dépôt CVD, les craquelures obtenues après pyrolyse de la résine précéramique permettent d'avoir une porosité favorable à l'infiltration des gaz. De ce fait, les parois internes et externes de la gyroïde sont renforcées (ce n'était pas le cas avec l'échantillon 3), améliorant significativement les propriétés mécaniques apparentes.

Conclusion des exemples.

Au cours de l'étape de fabrication, deux fils ont été testés : l'un en PLA, et l'autre à base d'élastomère et de PVA de marque POROLAY. Ce dernier donne les meilleurs résultats car il permet après lavage dans l'eau d'obtenir une microstructure microporeuse qui se révèle particulièrement intéressante pour l'infiltration de la résine dans l'étape suivante de transformation.

Dans l'étape de transformation, deux résines d'imprégnation ont été utilisées : la résine RS101 et la résine SMP10.

La résine SMP10 présente certains avantages dans le procédé final :

- A l'état pur, SMP10 est beaucoup plus fluide que RS101, facilitant l'imprégnation.
- Après pyrolyse, SMP10 a tendance à se craqueler, laissant une porosité favorable à l'infiltration des gaz de CVD.
- Après CVD, les parois internes et externes de la gyroïde (échantillon 4) sont recouvertes d'un dépôt de SiC (avec RS101, seule la paroi externe est renforcée - échantillon 3).
- Après pyrolyse, le résidu est en céramique (SiC) et non en carbone, ce qui donnera probablement de meilleures propriétés de résistance à l'oxydation.

En conclusion, en termes de résistance mécanique et de résistance à l'oxydation, l'échantillon 4 donne les meilleurs résultats.

## Revendications

1. Procédé de fabrication d'une pièce en une première céramique ou en carbone, consolidée par une deuxième céramique, possédant une géométrie déterminée, dans lequel on réalise les étapes successives suivantes :

   a) on fabrique une préforme en un polymère organique, la préforme possédant la même géométrie que la pièce à fabriquer ;
   b) on imprègne la préforme en un polymère organique par une résine précurseur de la première céramique ou une résine précurseur du carbone ;
   c) on réticule et/ou on polymérise, puis on pyrolyse la résine précurseur de la première céramique ou la résine précurseur du carbone ;
   d) éventuellement, on répète les étapes b) et c) ;
   moyennant quoi, à l'issue de l'étape c) ou de l'étape d), on obtient une pièce en une première céramique ou en carbone possédant la même géométrie que la pièce à fabriquer ;
   e) on dépose la deuxième céramique sur la pièce en une première céramique ou en carbone obtenue à l'issue de l'étape c) ou de l'étape d), par un procédé de dépôt chimique en phase vapeur ou un procédé d'infiltration chimique en phase vapeur.

2. Procédé selon la revendication 1, dans lequel la géométrie déterminée est une géométrie complexe.

3. Procédé selon la revendication 1 ou 2, dans lequel la première céramique est choisie parmi les céramiques oxydes, les céramiques nitrures, et les céramiques carbures.

4. Procédé selon la revendication 3, dans lequel la première céramique est choisie parmi le carbure de silicium, le carbure de titane, le carbure de zirconium, le carbure de hafnium, et le carbure de tantale.

5. Procédé selon l'une quelconque des revendications précédentes, dans lequel le polymère organique est un polymère thermoplastique.

6. Procédé selon la revendication 5, dans lequel le polymère thermoplastique est choisi parmi les acides polylactiques (PLA), les polycarbonates, les polyamides, les poly(chlorure de vinyle) (PVC), les polymères acrylonitrile-butadiène-styrène (ABS), les polymères élastomères thermoplastiques tels que les polymères élastomères thermoplastiques de polyuréthane, et leurs mélanges.

7. Procédé selon l'une quelconque des revendications précédentes, dans lequel la préforme en un polymère organique est préparée par un procédé de fabrication additive.

8. Procédé selon la revendication 5 et la revendication 7, dans lequel le procédé de fabrication additive est un procédé d'impression 3D de fil fondu.

9. Procédé selon l'une quelconque des revendications précédentes, dans lequel la préforme en un polymère organique présente une porosité, notamment une microporosité.

10. Procédé selon l'une quelconque des revendications précédentes, dans lequel la résine précurseur de la première céramique est choisie parmi les résines polycarbosilanes, et la résine précurseur du carbone est choisie parmi les résines phénoliques, notamment les résines formo-phénoliques.

11. Procédé selon l'une quelconque des revendications précédentes, dans lequel la deuxième céramique est choisie parmi les céramiques oxydes, les céramiques nitrures, et les céramiques carbures.

12. Procédé selon la revendication 11, dans lequel la deuxième céramique (céramique de consolidation) est choisie parmi le carbure de silicium, le carbure de titane, le carbure de zirconium, le carbure de hafnium, et le carbure de tantale.

13. Procédé selon l'une quelconque des revendications précédentes, dans lequel la pièce est en une première céramique, et la deuxième céramique est identique à la première céramique telle que le SiC.

## Patentansprüche

1. Verfahren zur Herstellung eines Teils aus einem ersten Keramikmaterial oder aus Kohlenstoff, das durch ein zweites Keramikmaterial konsolidiert ist, mit einer festgelegten Geometrie, in welchem Verfahren die folgenden aufeinanderfolgenden Schritte durchgeführt werden:

   a) es wird eine Vorform aus einem organischen Polymer hergestellt, wobei die Vorform dieselbe Geometrie wie das herzustellende Teil besitzt;
   b) die Vorform aus einem organischen Polymer wird durch ein Vorläuferharz dem ersten Keramikmaterial oder ein Vorläuferharz dem Kohlenstoff imprägniert;
   c) das Vorläuferharz dem ersten Keramikmaterial oder das Vorläuferharz dem Kohlenstoff wird vernetzt und/oder polymerisiert und danach pyrolysiert;
   d) gegebenenfalls werden die Schritte b) und c) wiederholt;
   wobei am Ende des Schrittes c) oder des Schrittes d) ein Teil aus einem ersten Keramikmaterial oder aus Kohlenstoff erhalten wird, welches dieselbe Geometrie wie das herzustellende Teil besitzt;
   e) das zweite Keramikmaterial wird auf dem am Ende des Schrittes c) oder des Schrittes d) erhaltenen Teil aus einem ersten Keramikmaterial oder aus Kohlenstoff durch ein chemisches Dampfabscheidungsverfahren oder ein chemische Dampfinfiltrationsverfahren abgelagert.

2. Verfahren nach Anspruch 1, wobei die festgelegte Geometrie eine komplexe Geometrie darstellt.

3. Verfahren nach Anspruch 1 oder 2, wobei das erste Keramikmaterial aus Oxidkeramiken, Nitridkeramiken und Karbidkeramiken ausgewählt ist.

4. Verfahren nach Anspruch 3, wobei das erste Keramikmaterial aus Siliziumkarbid, Titankarbid, Zirkoniumkarbid, Hafniumkarbid und Tantalkarbid ausgewählt ist.

5. Verfahren nach einem der vorhergehenden Ansprüche, wobei das organische Polymer ein thermoplastisches Polymer ist.

6. Verfahren nach Anspruch 5, wobei das thermoplastische Polymer aus Polymilchsäuren (PLA), Polycarbonaten, Polyamiden, Poly(vinylchlorid) (PVC), Acrylnitril-Butadien-Styrol (ABS) Polymeren, thermoplastischen Elastomer-Polymeren, wie z.B. thermoplastischen Elastomer-Polyurethanpolymeren, sowie deren Mischungen ausgewählt ist.

7. Verfahren nach einem der vorhergehenden Ansprüche, wobei die Vorform aus einem organischen Polymer durch ein additives Fertigungsverfahren hergestellt wird.

8. Verfahren nach Anspruch 5 und Anspruch 7, wobei das additive Fertigungsverfahren ein 3D-Schmelzdrahtdruckverfahren ist.

9. Verfahren nach einem der vorhergehenden Ansprüche, wobei die Vorform aus einem organischen Polymer eine Porosität, insbesondere eine Mikroporosität, aufweist.

10. Verfahren nach einem der vorhergehenden Ansprüche, wobei das Vorläuferharz dem ersten Keramikmaterial aus Polycarbosilan-Harzen ausgewählt ist und das Vorläuferharz dem Kohlenstoff aus Phenolharzen, insbesondere Phenolformaldehydharzen, ausgewählt ist.

11. Verfahren nach einem der vorhergehenden Ansprüche, wobei das zweite Keramikmaterial aus Oxidkeramiken, Nitridkeramiken und Karbidkeramiken ausgewählt ist.

12. Verfahren nach Anspruch 11, wobei das zweite Keramikmaterial (Konsolidierungskeramik) aus Siliziumkarbid, Titankarbid, Zirkoniumkarbid, Hafniumkarbid und Tantalkarbid ausgewählt ist.

13. Verfahren nach einem der vorhergehenden Ansprüche, wobei das Teil aus einem ersten Keramikmaterial besteht, und das zweite Keramikmaterial identisch mit dem ersten Keramikmaterial ist, wie zum Beispiel SiC.

**Claims**

1. A method for manufacturing a part made of a first ceramic or made of carbon, consolidated by a second ceramic, having a determined geometry, wherein the following successive steps are carried out:

   a) a preform made of an organic polymer is manufactured, the preform having the same geometry as the part to be manufactured;
   b) the preform made of an organic polymer is impregnated with a first-ceramic precursor resin or a carbon precursor resin;
   c) the first-ceramic precursor resin or the carbon precursor resin is cross-linked and/or polymerised and then pyrolysed;
   d) optionally, steps b) and c) are repeated;
   whereby, at the end of step c) or step d), a part made of a first ceramic or made of carbon, having the same geometry as the part to be manufactured, is obtained;
   e) the second ceramic is deposited onto the part made of a first ceramic or made of carbon obtained at the end of step c) or step d), by a Chemical Vapour Deposition method or a Chemical Vapour Infiltration method.

2. The method according to claim 1, wherein the determined geometry is a complex geometry.

3. The method according to claim 1 or 2, wherein the first ceramic is selected from oxide ceramics, nitride ceramics, and carbide ceramics.

4. The method according to claim 3, wherein the first ceramic is selected from silicon carbide, titanium carbide, zirconium carbide, hafnium carbide, and tantalum carbide.

5. The method according to any one of the preceding claims, wherein the organic polymer is a thermoplastic polymer.

6. The method according to claim 5, wherein the thermoplastic polymer is selected from polylactic acids (PLA), polycarbonates, polyamides, poly(vinyl chloride) (PVC), acrylonitrile-butadiene-styrene (ABS) polymers, thermoplastic elastomeric polymers such as polyurethane thermoplastic elastomeric polymers, and mixtures thereof.

7. The method according to any one of the preceding claims, wherein the preform made of an organic polymer is prepared by an additive manufacturing method.

8. A method according to claim 5 and claim 7, wherein the additive manufacturing method is a fused filament 3D printing method.

9. The method according to any of the preceding claims, wherein the preform made of an organic polymer has a porosity, especially a microporosity.

10. The method according to any one of the preceding claims, wherein the first-ceramic precursor resin is selected from polycarbosilane resins, and the carbon precursor resin is selected from phenolic resins, especially formo-phenolic resins.

11. The method according to any one of the preceding claims, wherein the second ceramic is selected from oxide ceramics, nitride ceramics, and carbide ceramics.

12. The method according to claim 11, wherein the second ceramic (consolidation ceramic) is selected from silicon carbide, titanium carbide, zirconium carbide, hafnium carbide, and tantalum carbide.

13. The method according to any one of the preceding claims, wherein the part is made of a first ceramic, and the second ceramic is identical to the first ceramic such as SiC.

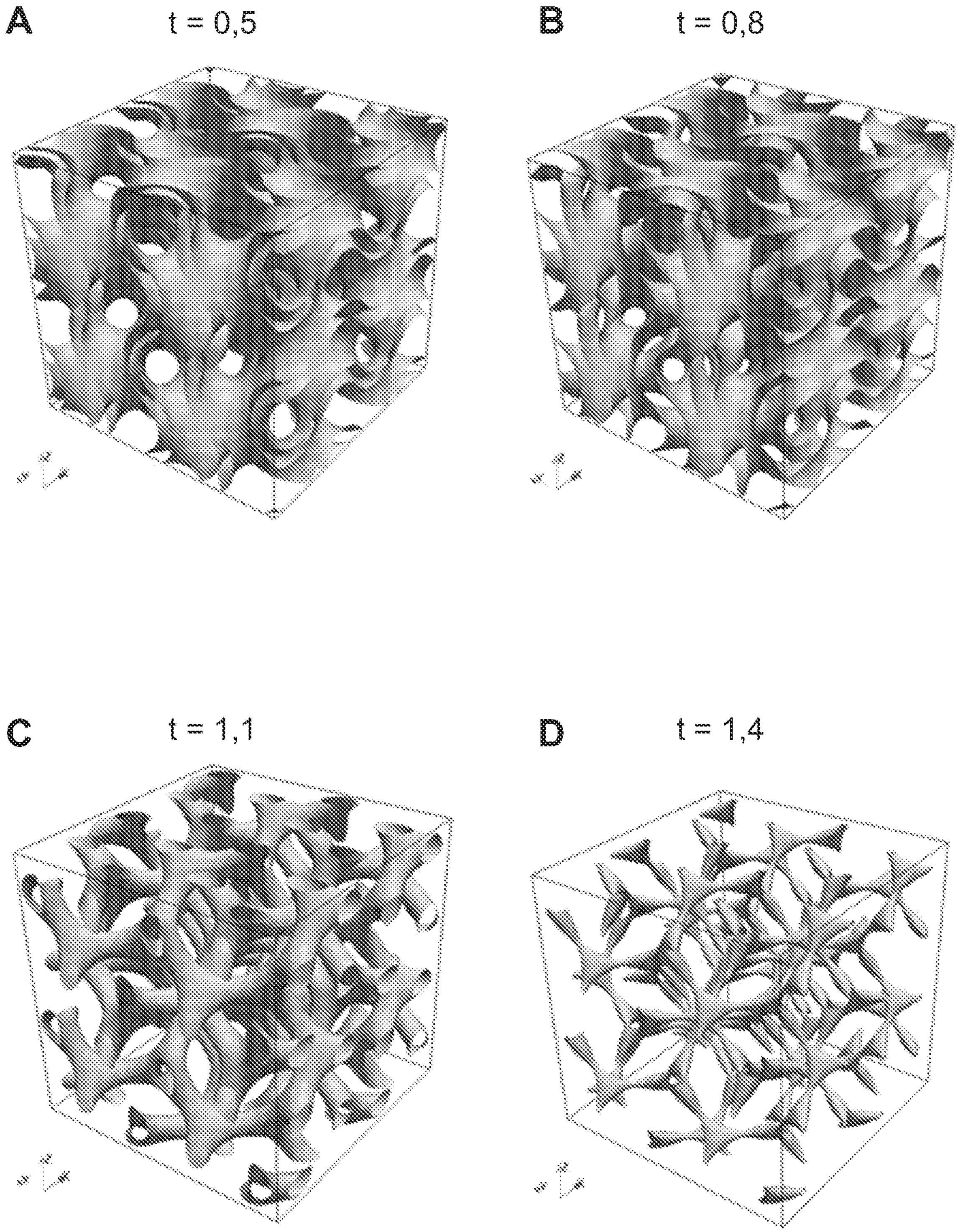


FIG.1

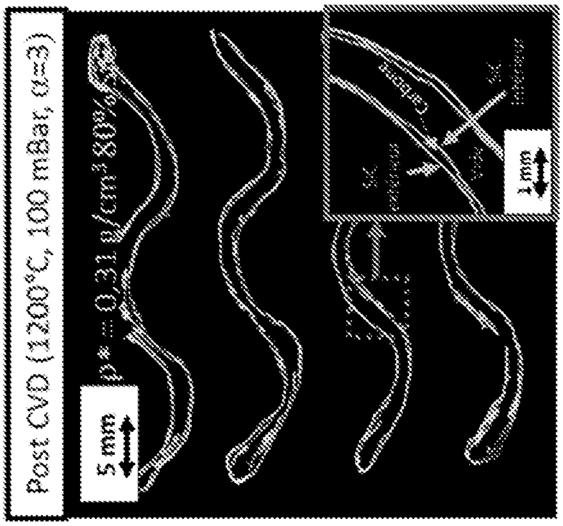


FIG.2C

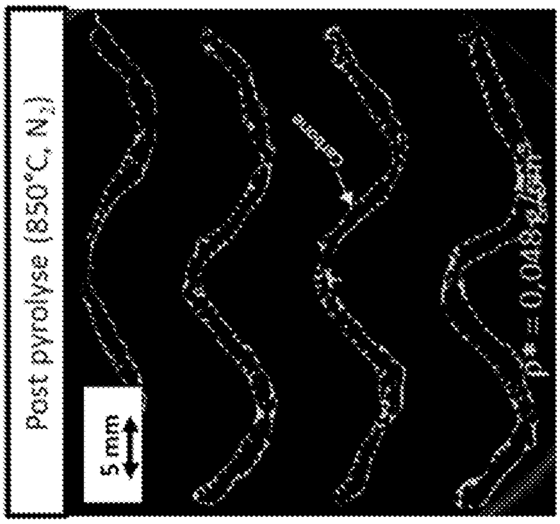


FIG.2B

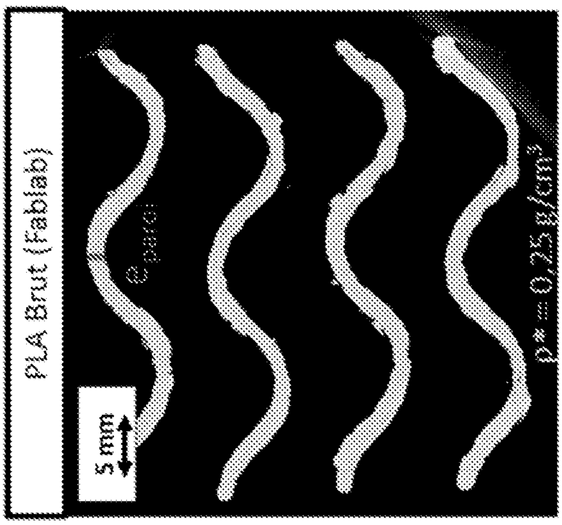


FIG.2A

FIG.3A FIG.3B FIG.3C

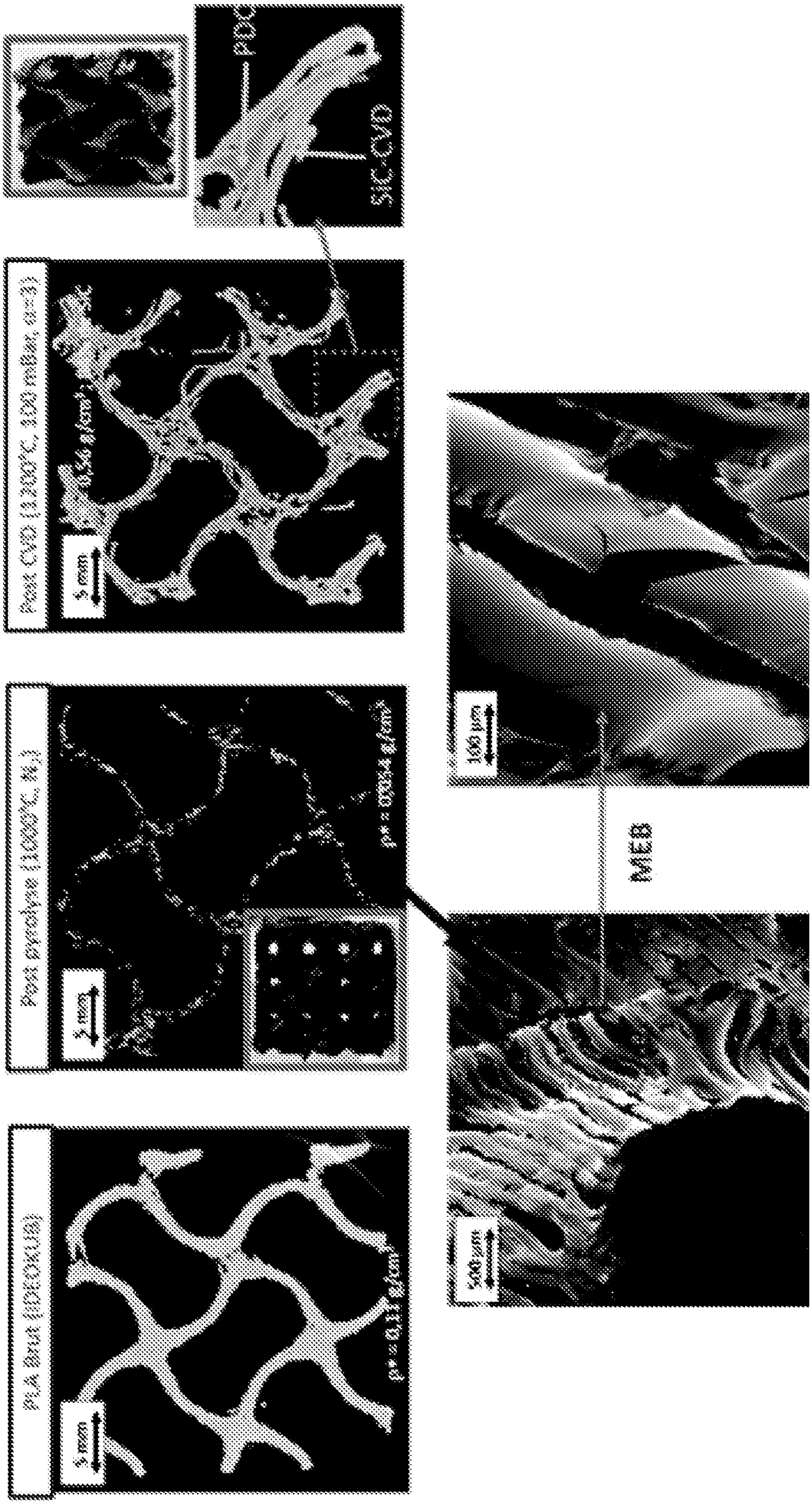


FIG.4A FIG.4B

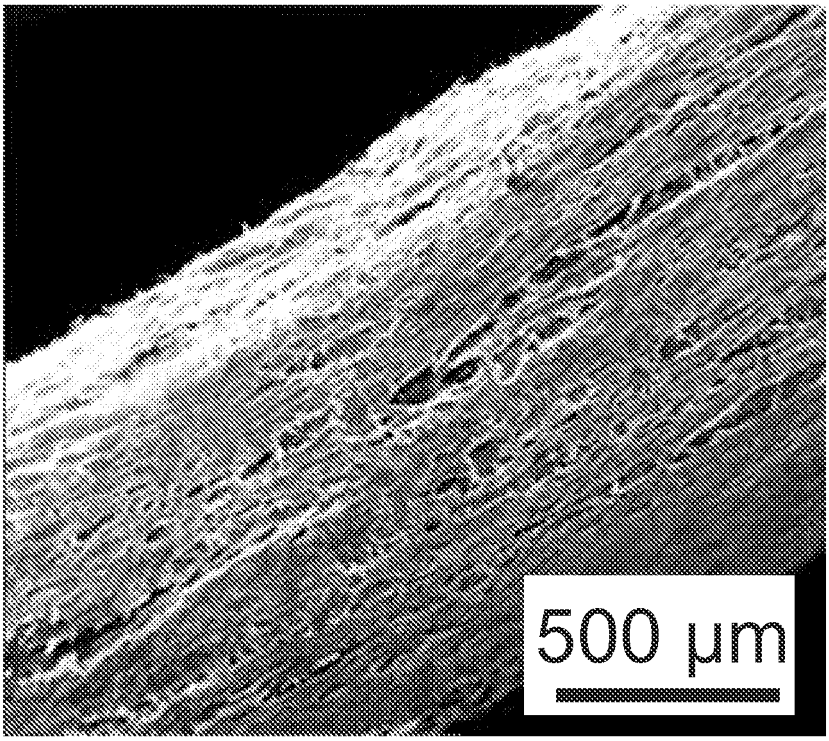


FIG.5

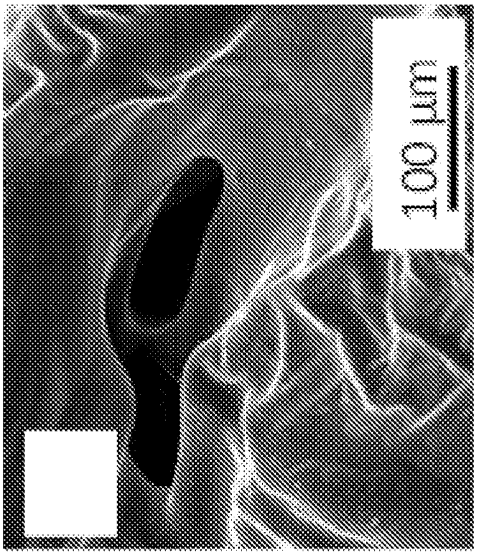


FIG.6C

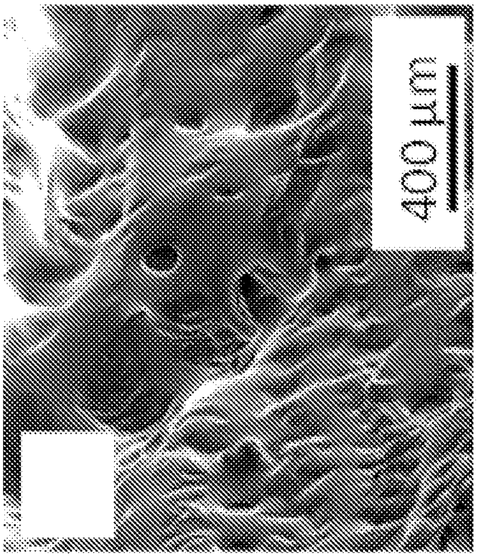


FIG.6B

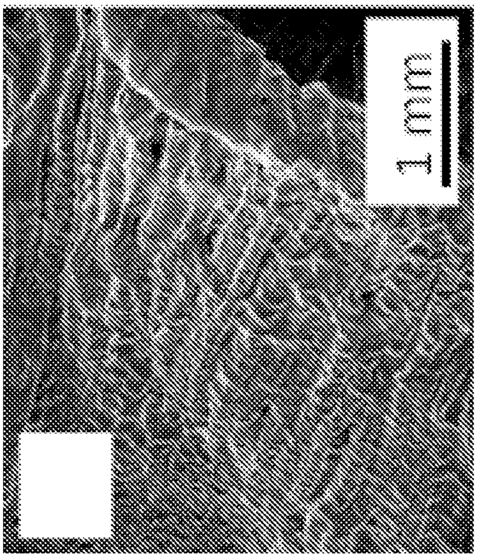


FIG.6A

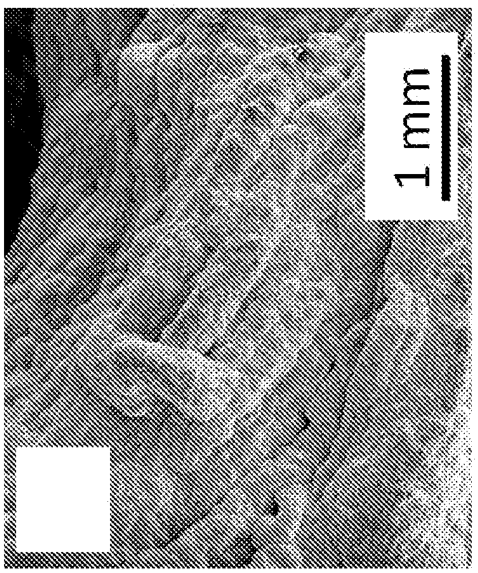

FIG.7A

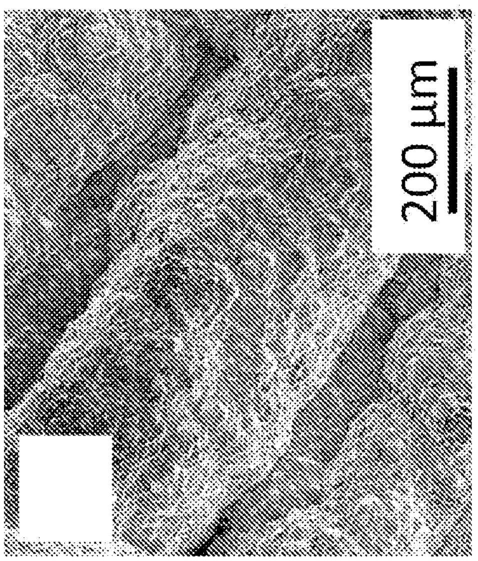

FIG.7B

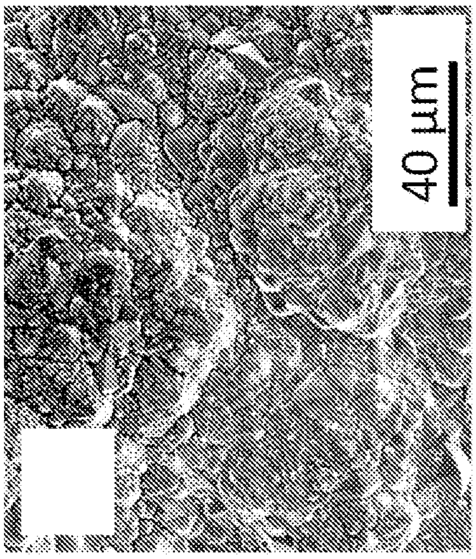

FIG.7C

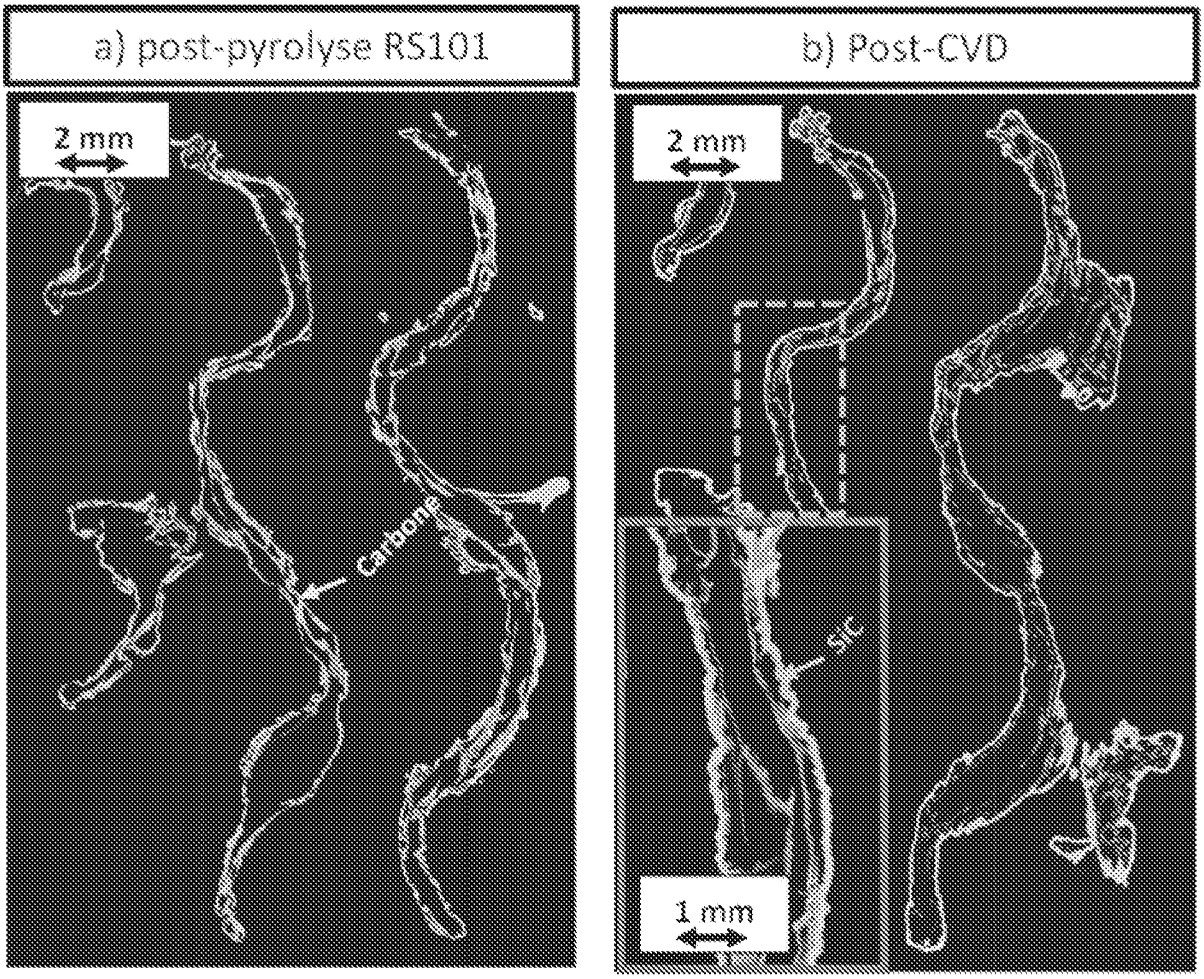


FIG.8A FIG.8B

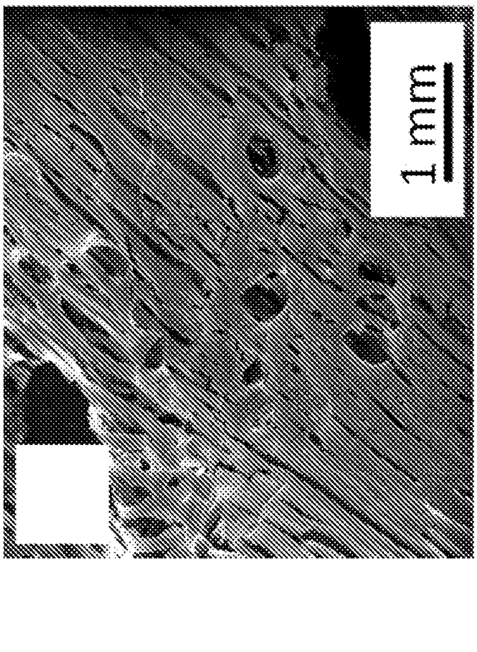


FIG.9A

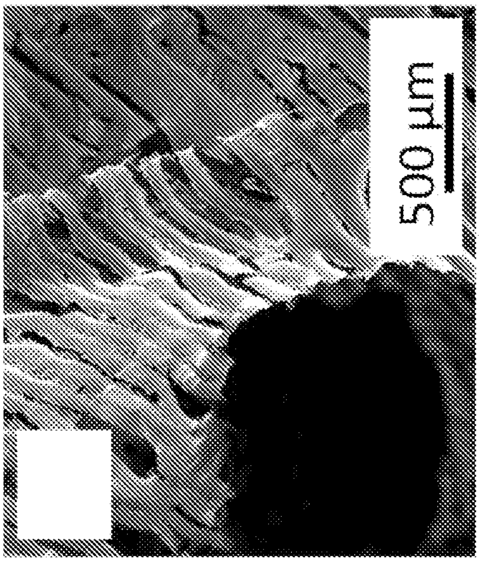


FIG.9B

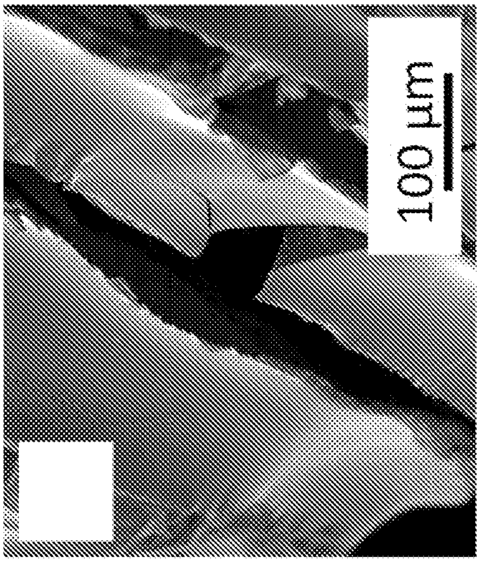


FIG.9C

FIG.10B

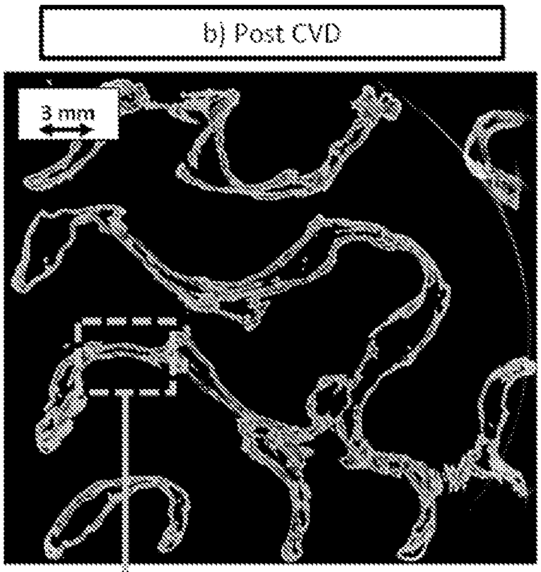


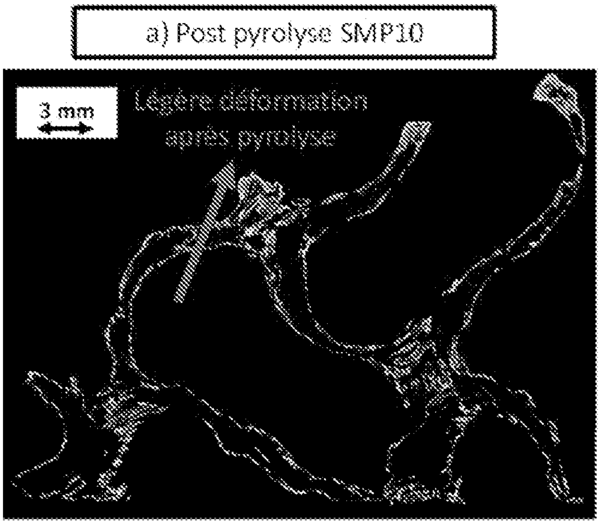


FIG.10A

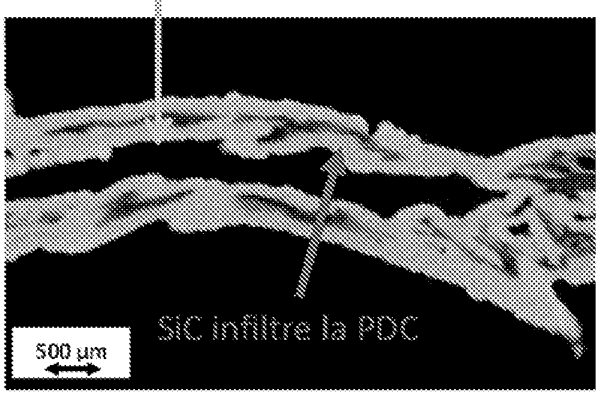


FIG.10C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **NANGREJO M.R. et al.** Processing of Ceramic Foams from Polymeric Precursor-Alumina Suspensions. *Cellular Polymers,* 2001, vol. 20 (1